# EUROPÄISCHE PATENTSCHRIFT

(11) **EP 4 504 449 B1**
(45) Veröffentlichungstag und Bekanntmachung des Hinweises auf die Patenterteilung: **15.10.2025**
(21) Anmeldenummer: 23722835.8
(22) Anmeldetag: 21.04.2023
(51) Int. Cl.: B23K 26/082, B23K 26/08, B23K 26/36

(54) **VERFAHREN ZUR LASERBASIERTEN BEARBEITUNG EINES WERKSTÜCKS UND LASERBEARBEITUNGSVORRICHTUNG ZUR DURCHFÜHRUNG DES VERFAHRENS**
METHOD FOR THE LASER-BASED PROCESSING OF A WORKPIECE AND LASER PROCESSING TOOL FOR CARRYING OUT THE METHOD
PROCÉDÉ D'USINAGE LASER D'UNE PIÈCE ET DISPOSITIF D'USINAGE LASER DESTINÉ À LA MISE EN OEUVRE DU PROCÉDÉ

(30) Priorität: 21.04.2022 EP 22169347
(43) Veröffentlichungstag der Anmeldung: 12.02.2025
(73) Patentinhaber: Rollomatic S.A., 2525 Le Landeron (CH)
(72) Erfinder: KRUMM, Christian, 2607 Cortébert (CH); FREIDY, Mouhamadali, 1020 Renens (CH); DA SILVA RIBEIRO, Fernando Manuel, 2517 Diesse (CH)
(74) Vertreter: Geitz Patentanwälte PartG mbB
(86) Internationale Anmeldenummer: PCT/EP2023/060457
(87) Internationale Veröffentlichungsnummer: WO 2023/203204

(56) Entgegenhaltungen:
- EP-A1- 3 613 388
- DE-A1- 102009 044 316
- DE-A1- 102014 109 613
- JP-A- 2013 091 095

## Beschreibung

Die Erfindung geht aus von einem Verfahren zur laserbasierten Bearbeitung eines länglichen Werkstücks, welches sich entlang einer geometrischen Werkstück-Längsachse erstreckt, siehe z.B. JP 2013 091095 A.

Es ist bekannt, Werkstücke mittels kurzer intensiver Laserpulse zu bearbeiten. Die Laserstrahlung mit hoher Leistungsdichte führt zu einer Erhitzung des Materials an der Oberfläche des Werkstücks. Die Oberfläche des Werkstücks erreicht dabei lokal eine so hohe Temperatur, dass das Material des Werkstücks verdampft oder sublimiert. Bei hoher Leistungsdichte des Lasers entsteht ein Plasma aus Elektronen und Ionen des abgetragenen Materials. Der Materialabtrag wird auch als Laserablation oder Laserverdampfen bezeichnet. Das Material kann dabei beispielsweise flächig in Schichten abgetragen werden. Ferner besteht die Möglichkeit, ein Werkstück mittels kontinuierlicher oder gepulster Laserstrahlung zu durchtrennen. Dies wird als Laserschneiden oder Laserstrahlschneiden bezeichnet. Die Parameter der Laserstrahlung müssen an das zu bearbeitende Material und die gewünschte Bearbeitung angepasst werden. Zu den Parametern der Laserstrahlung zählen die Wellenlänge und die mittlere Leistung. Ist die Laserstrahlung gepulst, gehören zu den Parametern ferner die Pulsenergie und Pulsdauer.

Laserstrahl und Werkstück werden für die Laserbearbeitung definiert relativ zueinander ausgerichtet und gegebenenfalls bewegt, um Material innerhalb vorgegebener Bereiche des Werkstücks gezielt abzutragen und bestimmte Werkstück-Konturen an der Oberfläche des Werkstücks auszubilden. Hierzu gehört unter anderem das Erzeugen von Schneiden oder sonstigen Kanten an Werkstücken.

Eine Laserbearbeitungsvorrichtung ist mit einem Laser ausgestattet, welcher einen Laserstrahl erzeugt. Der Laserstrahl erstreckt sich entlang einer Strahlachse. Dabei entspricht die Strahlachse einer geometrischen Geraden. Der Laser umfasst einen Laserkopf, der den Laserstrahl mit seiner Strahlachse gezielt auf ein Werkstück richtet und diesen gegebenenfalls innerhalb einer vorgegebenen Werkstück-Kontur über die Oberfläche eines Werkstücks bewegt. Das Werkstück wird in einer Vorrichtung zur Ausrichtung und Positionierung angeordnet, welche bei einer Werkzeugmaschine auch als Aufspanneinrichtung bezeichnet wird. Diese Vorrichtung ist mit einer Vorrichtungsbasis, einer Werkstück-Fixiereinrichtung und einer Bewegungseinrichtung ausgestattet. Die Vorrichtungsbasis ist ortsfest angeordnet. Sie kann Teil der Maschinenbasis der Laserbearbeitungsvorrichtung sein. Die Werkstück-Fixiereinrichtung nimmt das Werkstück auf und spannt es fest ein, so dass sich die Position des Werkstücks relativ zur Werkstück-Fixiereinrichtung während der Bearbeitung des Werkstücks nicht verändert. Die Bewegungseinrichtung sorgt für eine Bewegung der Werkstück-Fixiereinrichtung relativ zur Vorrichtungsbasis. Da der Laserkopf der Laserbearbeitungsvorrichtung in Relation zu der Vorrichtungsbasis in der Regel ortsfest angeordnet ist, sorgt die Bewegungseinrichtung damit auch für eine Relativbewegung zwischen dem Laserkopf einerseits und der Werkstück-Fixiereinrichtung andererseits. Entsprechend wird dadurch ein an der Werkstück-Fixiereinrichtung eingespanntes Werkstück relativ zu einem von dem Laserkopf erzeugten Laserstrahl bewegt. Dank der durch die Bewegungseinrichtung ausgelösten Relativbewegung kann damit eine Bearbeitung eines Werkstücks an seiner gesamten Oberfläche erfolgen, soweit die Werkstückoberfläche nicht durch die Werkstück-Fixiereinrichtung abgedeckt ist. Bei der Bearbeitung wird das Werkstück mit seiner Oberfläche unter verschiedenen Winkeln gegen den Laserstrahl ausgerichtet. Der Laserkopf kann mit einer Laserablenkeinrichtung ausgestattet sein, die den Laserstrahl mittels optischer Komponenten gezielt ablenkt und dabei mit hoher Geschwindigkeit über eine Oberfläche des Werkstücks führt. Diese Ablenkeinrichtung sorgt für eine zusätzliche Relativbewegung von Laserstrahl und Werkstück. Die Geschwindigkeit, mit der die Laserablenkeinrichtung des Laserstrahl bewegt, ist in der Regel größer als die Geschwindigkeit, mit der die Bewegungseinrichtung das Werkstück relativ zu der Vorrichtungsbasis bewegt.

Zur Bearbeitung eines Werkstücks wird der Laserstrahl üblicherweise mit seiner Strahlachse derart zu einem zu bearbeitenden Werkstück ausgerichtet, dass die Strahlachse senkrecht zu einer Oberfläche des Werkstücks ausgerichtet ist. Anschließend wird schichtweise Material an der Oberfläche eines Werkstücks abgetragen, bis das Werkstück eine gewünschte Werkstück-Form aufweist. Ein derartiges Verfahren eignet sich nur zur Bearbeitung kleiner Bereiche eines Werkstücks, da der schichtweise Materialabtrag sehr zeitaufwendig ist. Zur Bearbeitung eines Werkstücks entlang seiner gesamten Mantelfläche, insbesondere zur Erzeugung einer sich über den Umfang erstreckenden äußeren Werkstück-Kontur eines Werkstücks, ist ein derartiges Verfahren mit schichtweisem Materialabtrag aus Zeit- und Kostengründen ungeeignet. Dies gilt beispielsweise, wenn aus einem zylindrischen Rohling ein Bohrer oder eine Reibahle hergestellt werden soll.

Der Erfindung liegt die Aufgabe zugrunde, ein Verfahren und eine Vorrichtung zur laserbasierten Bearbeitung eines Werkstücks zur Verfügung zu stellen, mit denen aus einem Rohling ein Werkstück mit einer vorgegebenen äußeren Werkstück-Form, die sich zumindest in einem Axialabschnitt über den gesamten Umfang erstreckt, mit hoher Genauigkeit hergestellt werden kann, wobei das Werkstück während der gesamten Bearbeitung in einer Werkstück-Fixiereinrichtung eingespannt bleibt und ein Umspannen des Werkstücks entfällt.

Diese Aufgabe wird durch ein Verfahren mit den Merkmalen des Anspruchs 1 und durch eine Laserbearbeitungsvorrichtung mit den Merkmalen des Anspruchs 17 gelöst. Das zu bearbeitende längliche Werkstück erstreckt sich entlang einer geometrischen Werkstück-Längsachse. An dem Werkstück wird durch Materialabtrag mittels des Laserstrahls eine vorgegebene dreidimensionale äußere Werkstück-Form mit einer Werkstück-Kontur erzeugt. Dabei entspricht die Werkstück-Kontur der Schnittmenge der zu erzeugenden dreidimensionalen äußeren Werkstück-Form mit einer geometrischen Werkstück-Ebene, in der die geometrische Werkstück-Längsachse verläuft. Die Werkstück-Kontur erstreckt sich zwischen einem ersten Punkt A und einem zweiten Punkt **B,** wobei die Punkte A und B zumindest in axialer Richtung versetzt zueinander sind. Das Verfahren gemäß Anspruch 1 zeichnet sich dadurch aus, dass das Werkstück in einer Werkstück-Fixiereinrichtung einer Laserbearbeitungseinrichtung angeordnet wird und dass zeitgleich drei einander überlagerte Bewegungen ausgeführt werden, welche zu einem gezielten Materialabtrag an dem Werkstück führen:
Eine erste Bewegung ist eine Werkstück-Rotationsbewegung, bei der die Werkstück-Fixiereinrichtung das Werkstück um die geometrische Werkstück-Längsachse rotiert. Diese Rotation ist endlos. Das Werkstück vollführt dabei eine fortlaufende Abfolge vollständiger Umdrehungen. Da das Werkstück um die geometrische Werkstück-Längssachse rotiert wird, erfolgt die Rotation um eine werkstückgebundene Drehachse.

Eine zweite Bewegung ist eine gezielte Führung des Laserstrahls. Dabei wird der Laserstrahl mittels der Laserablenkeinrichtung entlang eines vorgegebenen Laserpfads bewegt. Dieser Laserpfad entspricht der Werkstück-Kontur der vorgegebenen dreidimensionalen Werkstück-Form zwischen dem Punkt A und dem Punkt B. Bei der Führung des Laserstrahls ist der Laserstrahl gegenüber der geometrischen Werkstück-Ebene senkrecht ausgerichtet oder schließt mit einer Normalen zur Werkstück-Ebene einen Winkel von maximal 10° ein. Eine Normale ist dabei eine zur Werkstück-Ebene senkrechte Gerade. Der Laserstrahl wird bei der zweiten Bewegung mehrfach an dem Laserpfad zwischen A und B entlanggeführt.

Eine dritte Bewegung ist eine Vorschubbewegung, bei der die Werkstück-Fixiereinrichtung und/ oder der Laserstrahl vorgeschoben werden, derart, dass die Oberfläche des in der Werkstück-Fixiereinrichtung angeordneten Werkstücks mit dem Laserstrahl derart in Kontakt tritt, dass der Laserstrahl tangential zu der Oberfläche des Werkstücks ausgerichtet ist oder mit der Tangente an die Oberfläche des Werkstücks einen Winkel von maximal 10° einschließt. Dabei mit dem Laserstrahl Material an der Oberfläche des Werkstücks abgetragen und die vorgegebene dreidimensionale äußere Werkstück-Form mit der Werkstück-Kontur erzeugt.

Dabei sind die drei Bewegungen zeitlich überlagert. Die die erste Bewegung, die zweite Bewegung und die dritte Bewegung werden gleichzeitig und parallel zueinander ausgeführt, bis die vorgegebene Werkstück-Kontur an dem Werkstück erzeugt ist.

Da das Werkstück kontinuierlich gedreht wird, während mit dem Laserstrahl an der Außenseite des Werkstücks Material abgetragen wird, erfolgt der Materialabtrag ähnlich wie bei einer Drehmaschine an dem gesamten äußeren Umfang des Werkstücks zumindest in dem axialen Abschnitt des Werkstücks, der sich zwischen den beiden Punkten A und B erstreckt.

Das Material wird dabei nicht schichtweise abgetragen, sondern es werden ganze Bereiche entlang des Umfangs des Werkstücks entfernt. Die erste Bewegung ist eine Abfolge von vollständigen Umdrehungen des Werkstücks um die geometrisch Werkstück-Längsachse. Die zweite Bewegung kann beliebig oft wiederholt werden. Hierzu wird der Laserstrahl entlang des Laserpfads zwischen dem ersten Punkt A und dem zweiten Punkt B mehrfach hin- und herbewegt. Die dritte Bewegung sorgt dafür, dass das rotierte Werkstück und der entlang des Laserpfads geführte Laserstrahl derart in Berührung kommen, dass an der Außenseite des Werkstücks gezielt durch den Laserstrahl Material abgetragen wird.

Die Werkstück-Kontur des Werkstücks wird durch die zu erzeugende äußere Werkstück-Form des Werkstücks vorgegeben. Sie entspricht einer Kurve, die das mit der zu erzeugenden Werkstück-Form ausgestattete Werkstück von seiner Umgebung in dem mit dem Verfahren zu bearbeitenden Bereich abgrenzt.

Die vorgegebene dreidimensionale äußere Werkstück-Form kann in dem axialen Abschnitt zwischen den beiden Punkten A und B unterschiedliche Querschnitte aufweisen. Dies führt dazu, dass die Werkstück-Kontur zwischen den Punkten A und B unterschiedliche Abstände zu der geometrischen Werkstück-Längsachse aufweist.

Die beiden Punkte A und B sind in axialer Richtung bezogen auf die geometrische Werkstück-Längsachse versetzt sind. Sie können zusätzlich auch in radialer Richtung versetzt zueinander sein.

Der Laserstrahl wird während der zweiten Bewegung derart zum Werkstück ausgerichtet, dass seine Strahlachse senkrecht zu der geometrischen Werkstück-Ebene ausgerichtet ist, in der die geometrische Werkstück-Längsachse verläuft oder mit einer zu der geometrischen Werkstück-Ebene einen Winkel von höchstens 10° einschließt.

Der Laserpfad entspricht der Schnittmenge zwischen der geometrischen Werkstück-Ebene und der zu erzeugenden dreidimensionalen äußeren Werkstück-Form. Die Schnittmenge erstreckt sich in der Werkstück-Ebene zu beiden Seiten der geometrischen Werkstück-Längsachse. Bei rotationssymmetrischen Formen des Werkstücks ist die Schnittmenge achsensymmetrisch zur geometrischen Werkstück-Längsachse. Der Laserpfad kann nur auf einer Seite der Werkstück-Längsachse oder auf beiden Seiten der Werkstück-Längsachse verlaufen.

Die erste, zweite und dritte Bewegung werden derart aufeinander abgestimmt, dass jede beliebige äußere Werkstück-Form des Werkstücks erzeugt werden kann. Hierzu zählen rotationssymmetrische Werkstück-Formen und nichtrotationssymmetrische Werkstück-Formen, beispielsweise äußere Werkstück-Formen, die ebene Oberflächen aufweisen.

Mit dem erfindungsgemäßen Verfahren kann eine äußere Werkstück-Form des Werkstücks erzeugt werden, die sich über den gesamten äußeren Umfang des Werkstücks erstreckt und die eine Ausdehnung in axialer Richtung bezogen auf die Werkstück-Längsachse aufweist. Während dieser Bearbeitung bleibt das Werkstück in der Werkstück-Fixiereinrichtung eingespannt. Die Bearbeitung ist schnell und präzise.

Ein wesentlicher Vorteil des erfindungsgemäßen Verfahrens besteht darin, dass sich bei einem fokussierten Laserstrahl der Fokus während der Laserbearbeitung stets an der zu bearbeitenden Position oder sehr nahe dieser Position befindet. Dies ermöglicht eine optimale Bearbeitung des Werkstücks.

Nach einer weiteren vorteilhaften Ausgestaltung der Erfindung wird der Laserstrahl entlang des Laserpfads von A nach B und anschließend von B nach A geführt. Diese Bewegung kann beliebig oft wiederholt werden, bis die vorgegebene Werkstück-Form an dem Werkstück erzeugt ist.

Nach einer weiteren vorteilhaften Ausgestaltung der Erfindung wird der Laserstrahl entlang des Laserpfads mehrfach von A nach B bewegt, wobei die Bewegung des aktiven Laserstrahls ausschließlich in die Richtung von A nach B erfolgt und nicht umgekehrt. Um den Laserstrahl nach Erreichen des Punktes B wieder an den Punkt A zurückzuführen, wird der Laserstrahl entweder bei der Rückführung ausgeschaltet oder die Rückführung erfolgt bei aktiviertem Laserstrahl entlang einer Kurve, welche von dem durch die zu erzeugende Werkstück-Kontur des Werkstücks vorgegebenen Laserpfad A - B abweicht, wobei diese Kurve sich außerhalb des zu bearbeitenden Werkstücks erstreckt, um eine unerwünschte Wechselwirkung zwischen dem Laserstrahl und dem Werkstück zu vermeiden.

Nach einer weiteren vorteilhaften Ausgestaltung der Erfindung wird der Laserstrahl bei der zweiten Bewegung entlang des Laserpfads von A nach B im wesentlichen senkrecht zur Strahlachse des Laserstrahls bewegt. Die Bewegungsrichtung des Laserstrahls bei der zweiten Bewegung ist damit im wesentlichen senkrecht zur Strahlachse des Laserstrahls.

Nach einer weiteren vorteilhaften Ausgestaltung der Erfindung stellen der erste Punkt A und der zweite Punkt B in axialer Richtung bezogen auf die Werkstück-Längsachse die Grenzen der zu erzeugenden dreidimensionalen äußeren Werkstück-Form dar. Die Laserbearbeitung erstreckt sich in axialer Richtung zwischen den Grenzen der Punkte A und B.

Nach einer weiteren vorteilhaften Ausgestaltung der Erfindung führt der Laserstrahl zusätzlich eine vierte Bewegung aus, bei der der Laserstrahl in offenen oder geschlossenen Kurven um ein Zentrum bewegt wird. Dabei ist die vierte Bewegung der zweiten Bewegung überlagert. Das Zentrum der vierten Bewegung befindet sich auf der Kurve, die durch den Verlauf der zu erzeugenden Werkstück-Kontur vorgegeben ist. Dabei kann der Durchmesser des Laserstrahls als Versatz berücksichtigt werden. Der Laserstrahl wird damit gemäß der zweiten Bewegung entlang der zu erzeugenden Werkstück-Kontur von dem ersten Punkt A zu dem zweiten Punkt B bewegt und gleichzeitig gemäß der vierten Bewegung entlang von kleinen geschlossenen oder offenen Kurven geführt. Der Laserstrahl wird dabei nicht nur entlang einer geradlinigen, gekrümmten oder unregelmäßig geformten Linie entlanggeführt, die der zu erzeugenden Werkstück-Kontur entspricht, sondern vollführt mit der vierten Bewegung um die zu erzeugende Werkstück-Kontur herum eine schleifenförmige Bewegung. Dadurch kann der Bereich, in dem beim Auftreffen des Laserstrahls auf das Werkstück ein Materialabtrag an dem Werkstück erfolgt, vergrößert werden. Dabei ist die Ausdehnung der offenen oder geschlossenen Kurven klein gegenüber der zu erzeugenden Werkstück-Kontur. Bei den geschlossenen Kurven kann es sich beispielsweise um Kreise, Ellipsen oder um die Form der Zahl acht handeln. Offene Kurven zeichnen sich dadurch aus, dass der Anfangs- und Endpunkt der Kurve nicht zusammenfallen.

Nach einer weiteren vorteilhaften Ausgestaltung der Erfindung beträgt das Verhältnis zwischen dem Durchmesser der offenen oder geschlossenen Kurve und dem Durchmesser des Laserstrahls beim Auftreffen auf das Werkstück zwischen 1,2 und 150. Dadurch ist gewährleistet, dass die Ausdehnung der offenen oder geschlossenen Kurven klein ist gegenüber der zu erzeugenden Werkstück-Kontur. Die Kurve weist in bevorzugter Weise einen Durchmesser zwischen 0,05 mm und 2,0 mm auf. Der Durchmesser des Laserstrahls beim Auftreffen auf das Werkstück beträgt bevorzugt zwischen 0,008 mm und 0,03 mm, besonders bevorzugt zwischen 0,015 mm und 0,03 mm.

Nach einer weiteren vorteilhaften Ausgestaltung der Erfindung wird bei der dritten Bewegung die Werkstück-Fixiereinrichtung in einer Richtung senkrecht zur Strahlachse des Laserstrahls bewegt.

Nach einer weiteren vorteilhaften Ausgestaltung der Erfindung wird bei der dritten Bewegung die Werkstück-Fixiereinrichtung senkrecht zu der geometrischen Werkstück-Längsachse bewegt.

Nach einer weiteren vorteilhaften Ausgestaltung der Erfindung wird bei der dritten Bewegung der Laserstrahl in Richtung der geometrischen Werkstück-Längsachse bewegt.

Nach einer weiteren vorteilhaften Ausgestaltung der Erfindung umfasst die dritte Bewegung eine lineare Bewegung in radialer Richtung bezogen auf die Werkstück-Längsachse.

Nach einer weiteren vorteilhaften Ausgestaltung der Erfindung umfasst die dritte Bewegung eine lineare Bewegung in axialer Richtung oder parallel zur axialen Richtung bezogen auf die Werkstück-Längsachse. Die dritte Bewegung kann eine Überlagerung einer radialen und einer axialen Bewegung bezogen auf die Werkstück-Längsachse umfassen.

Nach einer weiteren vorteilhaften Ausgestaltung der Erfindung ist der Laserstrahl mit seiner Strahlachse beim Abtragen von Material an der Oberfläche des Werkstücks parallel zu einer radialen Richtung bezogen auf die geometrische Werkstück-Längsachse ausgerichtet. Die Vorschubbewegung der dritten Bewegung führt dazu, dass sich der Fokus des Laserstrahls entweder an der Oberfläche des Werkstücks, auf der zu erzeugenden Werkstück-Kontur oder nahe bei einem dieser Punkte befindet.

Nach einer weiteren vorteilhaften Ausgestaltung der Erfindung ist der Laserstrahl mit seiner Strahlachse gegenüber einer Tangente an die Oberfläche der zu erzeugenden Werkstück-Form des Werkstücks um einen Winkel α in axialer Richtung geneigt, wobei der Winkel α zwischen 1° und 10° beträgt. Dabei kann die Neigung um den Winkel α gegenüber der Tangente in jede beliebige Richtung erfolgen. Die Tangente an die Oberfläche spannt zusammen mit der Strahlachse eine Ebene auf. Diese Ebene kann beispielsweise senkrecht zu der geometrischen Werkstück-Längsachse oder parallel zu der geometrischen Werkstück-Längsachse sein. Darüber hinaus kann die Ebene jede beliebige andere Ausrichtung relativ zu der geometrischen Werkstück-Längsachse aufweisen.

Nach einer weiteren vorteilhaften Ausgestaltung der Erfindung ist die dritte Bewegung in Abhängigkeit von der zweiten Bewegung gesteuert.

Nach einer weiteren vorteilhaften Ausgestaltung der Erfindung ist die dritte Bewegung in Abhängigkeit von der ersten Bewegung gesteuert.

Nach einer weiteren vorteilhaften Ausgestaltung der Erfindung erfolgt in dem Axialabschnitt zwischen den Punkten A und B entlang des gesamten Umfangs des Werkstücks ein Materialabtrag erfolgt.

Nach einer weiteren vorteilhaften Ausgestaltung erfolgt während des gesamten Materialabtrags die Werkstück-Rotationsbewegung mit konstanter Geschwindigkeit. Alternativ dazu kann die Rotationsgeschwindigkeit in Abhängigkeit von der zweiten und dritten Bewegung und/ oder in Abhängigkeit von der zu erzeugenden äußeren Werkstück-Form geändert werden.

Nach einer weiteren vorteilhaften Ausgestaltung wird das in der Werkstück-Fixiereinrichtung angeordnete Werkstück mit einer Drehgeschwindigkeit zwischen 5 und 1.000 U/min rotiert. Dabei kann die Drehgeschwindigkeit während der gesamten Bearbeitung konstant bleiben oder in Abhängigkeit vom Werkstück und/ oder der zu erzeugenden Werkstück-Form variieren. Für ein rotationssymmetrisches Werkstück kann beispielsweise eine konstante Drehgeschwindigkeit zwischen 50 und 300 U/min eingestellt werden. Dies ist jedoch nicht obligatorisch. Die Drehzahl kann auch je nach Durchmesser der Werkstücke angepasst werden. Bei einem rotationssymmetrischen Durchmesser des Werkstücks kann zum Beispiel die Rotationsgeschwindigkeit zu Beginn geringer sein, solange der Laserstrahl noch nicht die Oberfläche des Werkstücks berührt. Sobald der Laserstrahl sich der Oberfläche des Werkstücks nähert, kann die Rotationsgeschwindigkeit erhöht werden. Dies wirkt sich auf die Menge des von der Oberfläche des Werkstücks abgetragenen Materials aus. So kann beispielsweise durch eine Änderung und Anpassung der Drehgeschwindigkeit erreicht werden, dass in vorgegebenen Zeitintervallen gleiche Mengen an Material abgetragen werden, obwohl sich der Durchmesser des Werkstücks durch den Materialabtrag ändert.

Nach einer weiteren vorteilhaften Ausgestaltung wird bei der zweiten Bewegung, welche eine Führung des Laserstrahls darstellt, der Laserstrahl mit einer Geschwindigkeit zwischen 0,05 m/s und 10 m/s bewegt.

Nach einer weiteren vorteilhaften Ausgestaltung findet die dritte Bewegung, bei der die Werkstück-Fixiereinrichtung und/ oder der Laserstrahl aufeinander zu bewegt werden, mit einer Geschwindigkeit zwischen 0,05 mm/min und 500 mm/min statt.

Nach einer weiteren vorteilhaften Ausgestaltung wird die Drehrichtung, mit der die Werkstück-Fixiereinrichtung rotiert, während der Laserbearbeitung des Werkstücks geändert.

Die Laserbearbeitungsvorrichtung zur Durchführung des erfindungsgemäßen Verfahrens zeichnet dadurch aus, dass sie eine das Werkstück aufnehmende und fixierende Werkstück-Fixiereinrichtung, eine Bewegungseinrichtung, welche die Werkstück-Fixiereinrichtung relativ zu einer Vorrichtungsbasis bewegt, und einen Laser umfasst, welcher einen entlang einer Strahlachse gerichteten Laserstrahl erzeugt und welcher eine den Laserstrahl gezielt ablenkende Laserablenkeinrichtung aufweist. Dabei ist die Bewegungseinrichtung ausgebildet, eine Werkstück-Rotationsbewegung eines in der Werkstück-Fixiereinrichtung angeordneten Werkstücks auszuführen. Diese Bewegung wird als erste Bewegung bezeichnet. Die Laserablenkeinrichtung ist ausgebildet, den Laserstrahl zu führen und dabei den Laserstrahl entlang eines vorgegebenen Laserpfads zu bewegen, wobei sich der Laserpfad von einem ersten Punkt A bis zum einem zweiten Punkt B erstreckt und der Laserpfad durch den Verlauf der zu erzeugenden Werkstück-Kontur vorgegeben ist. Diese Bewegung wird als zweite Bewegung bezeichnet. Die Bewegungseinrichtung und/ oder der Laser führen eine Vorschubbewegung aus, derart, dass die Oberfläche des in der Werkstück-Fixiereinrichtung angeordneten Werkstücks mit dem Laserstrahl in Kontakt tritt, wobei mit dem Laserstrahl Material an der Oberfläche des Werkstücks abgetragen und die vorgegebene äußere Werkstück-Kontur erzeugt wird. Diese Vorschubbewegung wird als dritte Bewegung bezeichnet. Dabei ist die Laserbearbeitungseinrichtung derart ausgebildet, dass die erste Bewegung, die zweite Bewegung und die dritte Bewegung zeitgleich und aufeinander abgestimmt ausgeführt werden.

Erfindungsgemäß ist die Laserbearbeitungsvorrichtung mit einer Steuerungseinrichtung ausgestattet, welche die erste Bewegung, die zweite Bewegung und die dritte Bewegung steuert. Dadurch ist gewährleistet, dass die drei Bewegung aufeinander abgestimmt sind. Führt der Laserstrahl eine zusätzliche vierte Bewegung aus, so steuert die Steuerungseinrichtung vorteilhafterweise auch diese vierte Bewegung.

Weitere Vorteile und vorteilhafte Ausgestaltungen der Erfindung können der nachfolgenden Beschreibung, der Zeichnung und den Ansprüchen entnommen werden.

### Zeichnung

In der Zeichnung sind Ausführungsbeispiele der erfindungsgemäßen laserbasierten Bearbeitung eines Werkstücks dargestellt. Es zeigen:
- Figur 1: erstes Ausführungsbeispiel einer laserbasierten Bearbeitung eines Werkstücks,
- Figur 2: Werkstück gemäß Figur 1 zu Beginn der Bearbeitung,
- Figur 3: Werkstück gemäß Figur 1 zu verschiedenen Zeitpunkten der Bearbeitung,
- Figur 4: Darstellung der Ausrichtung Laserstrahls bei der Bearbeitung gemäß Figuren 1 bis 3 und Darstellung der Bewegungsrichtung der dritten Bewegung,
- Figur 5: Darstellung einer alternativen Ausrichtung des Laserstrahls bei der Bearbeitung gemäß Figuren 1 bis 3 und Darstellung der Bewegungsrichtung der dritten Bewegung,
- Figur 6: Darstellung der Ausrichtung Laserstrahls bei der Bearbeitung gemäß Figuren 4 und Darstellung einer alternativen Bewegungsrichtung der dritten Bewegung,
- Figur 7: Darstellung der zweiten und vierten Bewegung bezogen auf den Laserstrahl,
- Fig. 8: Darstellung der zweiten und einer alternativen vierten Bewegung bezogen auf den Laserstrahl,
- Figur 9a: Werkstück in einer perspektivischen Ansicht in einem relativ frühen Zustand der Laserbearbeitung,
- Figur 9b: Werkstück in dem zustand gemäß Figur 9a in einer Ansicht von vorne,
- Figur 10a: Werkstück in einer perspektivischen Ansicht am Ende der Laserbearbeitung,
- Figur 10b: Werkstück in dem Zustand gemäß Figur 10a in einer Ansicht von vorne,
- Figur 11: Werkstück in perspektivischer Ansicht und in einer Ansicht von vorne zu verschiedenen Zeitpunkten der Laserbearbeitung,
- Figur 12: Werkstück und Laserstrahl, wobei sich der Laserstrahl an unterschiedlichen Positionen entlang des Laserpfads befindet,
- Figur 13: zweites Ausführungsbeispiel einer laserbasierten Bearbeitung eines Werkstücks,
- Figur 13a bis 13n: Werkstück und Laserstrahl gemäß zweitem Ausführungsbeispiel zu verschiedenen Zeitpunkten der Laserbearbeitung,
- Figur 14: nicht erfindungsgemäßes Ausführungsbeispiel einer laserbasierten Bearbeitung eines Werkstücks,
- Figur 15: Werkstück gemäß Figur 14 vor Beginn der Laserbearbeitung,
- Figur 16: Werkstück gemäß Figur 14 zu Beginn der Laserbearbeitung,
- Figur 17: Werkstück gemäß Figur 14 während der Laserbearbeitung,
- Figur 18: Werkstück gemäß Figur 14 nach Abschluss der Laserbearbeitung,
- Figur 19: Laserbearbeitungsvorrichtung in perspektivischer Ansicht.

### Beschreibung der Ausführungsbeispiele

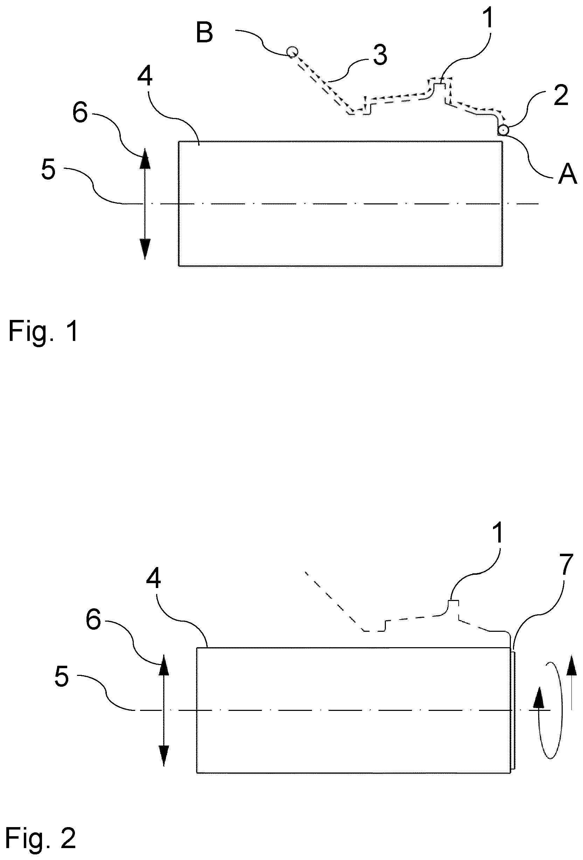

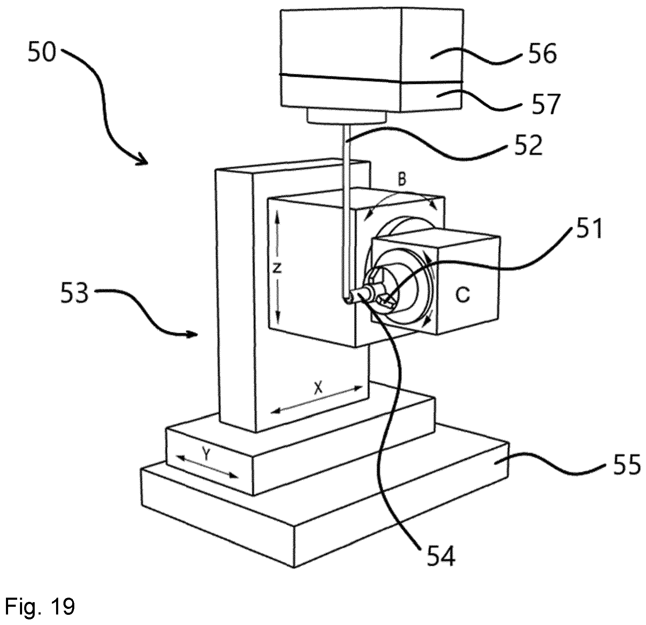

In den Figuren 1 bis 12 ist ein erstes Verfahren zur laserbasierten Bearbeitung eines Werkstücks 4 mittels eines Laserstrahls 2 dargestellt. Das Werkstück 4 liegt zunächst als Rohling vor. Der Rohling hat die Form eines Kreiszylinders. Das Werkstück 4 ist in einer Werkstück-Fixiereinrichtung einer Laserbearbeitungsvorrichtung eingespannt. Die Laserbearbeitungsvorrichtung 50 mit einer Werkstück-Fixiereinrichtung 51, einer Bewegungseinrichtung 53 und einem Laser 56 ist in Figur 19 dargestellt. Die Bewegungseinrichtung sorgt für eine Bewegung des Werkstück-Fixiereinrichtung relativ zu einer Vorrichtungsbasis-Basis 55. Zu der Bewegung zählt unter anderem eine Rotation der Werkstück-Fixiereinrichtung 51 zusammen mit dem in der Werkstück-Fixiereinrichtung 51 aufgenommenen Werkstück 4 oder 54 um eine geometrische Achse, die mit der geometrischen Werkstück-Längsachse 5 zusammenfällt. Die Werkstück-Längsachse 5 erstreckt sich dabei durch das Werkstück 4. Es handelt sich daher um eine Werkstück-gebundene Drehachse. Im vorliegenden Fall hat das Werkstück 4 vor der Laserbearbeitung die Form eines Kreiszylinders. Dieser ist rotationssymmetrisch bezogen auf die geometrische Werkstück-Längsachse 5. Bei der Rotation um die Werkstück-Längsachse 5 führt das Werkstück 4 eine fortlaufende Abfolge vollständiger Umdrehungen aus. Diese Bewegung wird als erste Bewegung bezeichnet. Sie ist in den Figuren 2 bis 6 durch einen kreisförmigen Pfeil rechts neben dem Werkstück 4 dargestellt.

Mit der Laserbearbeitung soll an dem Werkstück eine äußere Werkstück-Form mit der Werkstück-Kontur 1 erzeugt werden. Bei dem Ausführungsbeispiel gemäß Figuren 1 bis 12 ist die zu erzeugende Werkstück-Form rotationssymmetrisch bezogen auf die Geometrische Werkstück-Längsachse 5.

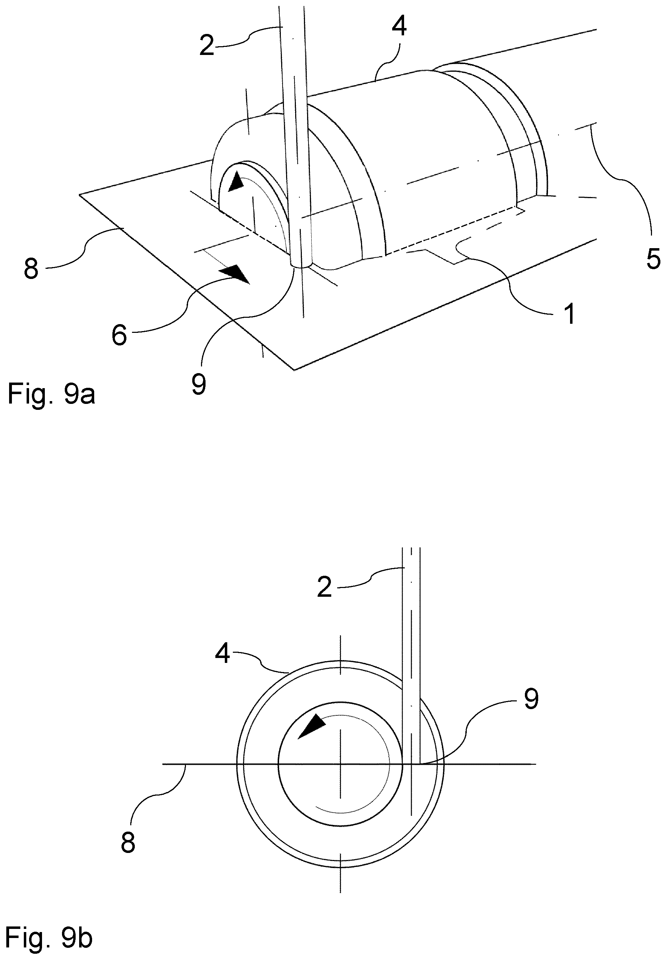

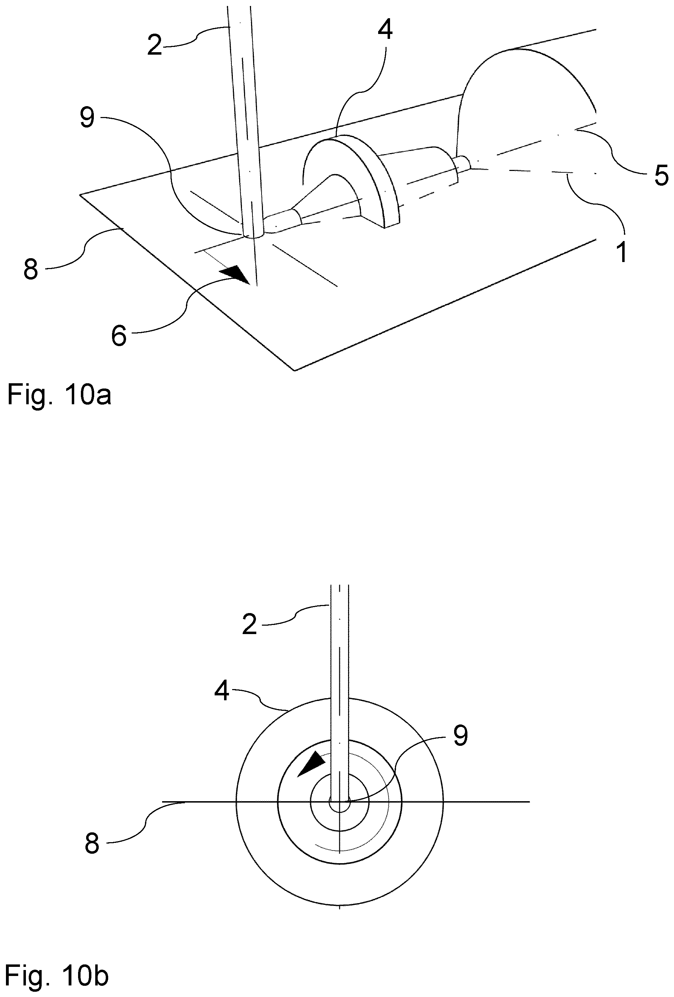

Der Laserstrahl 2 mit geometrischer Strahlachse 2a wird durch den in Figur 19 dargestellten Laser 56 erzeugt und mittels eine in Figur 19 dargestellten Laserablenkeinrichtung entlang der Werkstück-Kontur 1 geführt. Diese Bewegung des Laserstrahls wird als zweite Bewegung bezeichnet. Der Laserpfad 3 ist durch die Werkstück-Kontur 1 vorgegeben. Er erstreckt sich von einem ersten Punkt A bis zu einem zweiten Punkt B. Der Versatz zwischen der Werkstück-Kontur 1 und dem Laserpfad 3 beruht auf dem Radius des Laserstrahls 2 in einer geometrischen Werkstück-Ebene 8, welche in den Figuren 9a, 9b, 10a und 10b dargestellt ist. Dabei wird berücksichtigt, dass das Laserstrahl 2 an dem Werkstück 4 nicht nur in einem Punkt in der Mitte des Laserstrahls Material abtragen kann, sondern in einem kreisförmigen Bereich.

Der Laserstrahl 2 wird während der Laserbearbeitung mehrfach entlang des Laserpfads zwischen den Punkten A und B entlang geführt, bis so viel Material mit dem Laserstrahl 2 an dem Werkstück 4 abgetragen ist, dass die vorgebebene äußere Werkstück-Form erzeugt ist. Dabei kann der Laserstrahl zwischen den Punkten A und B hin- und herbewegt werden oder der Laserstrahl kann immer nur in eine Richtung von A nach B oder von B nach A geführt werden. Die Anzahl der Zyklen, die der Laserstrahl 2 entlang des Laserpfads 3 geführt werden muss, hängt von der Art und der Menge des zu entfernenden Materials und von dem Laser ab.

Bevorzugt ist der Laser ein gepulster Laser. Durch die kurzen Laserpulse wird an der Oberfläche des Werkstücks eine hohe Energiedichte erzeugt, ohne dass dabei ein unerwünschter Wärmeeintrag in das Werkstück erfolgt. Die Dauer der Laserpulse liegt bevorzugt im Pikosekunden- oder Femtosekunden-Bereich.

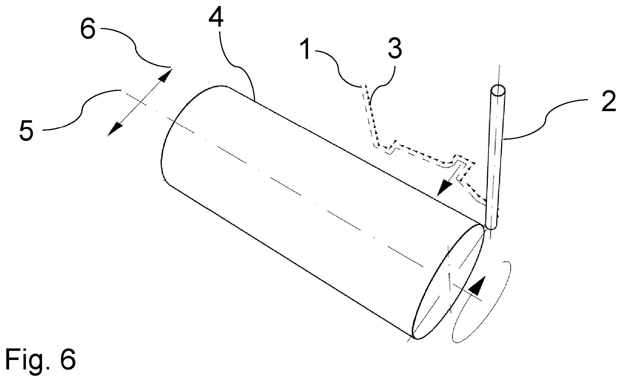

Durch eine Vorschubbewegung, bei der die Werkstück-Fixiereinrichtung und/ oder der Laserstrahl vorgeschoben werden, tritt die Oberfläche des in der Werkstück-Fixiereinrichtung angeordneten Werkstücks 4 mit dem Laserstrahl 2 in Kontakt, wobei mit dem Laserstrahl 2 Material an der Oberfläche des Werkstücks 4 abgetragen und die Werkstück-Kontur 1 Schritt für Schritt erzeugt wird. Diese Vorschubbewegung wird als dritte Bewegung bezeichnet. In den Figuren 1 bis 6 ist diese Vorschubbewegung eine lineare Bewegung des Werkstücks 4 senkrecht zur geometrischen Werkstück-Längsachse 5 mit der Bewegungsrichtung 6. In Figur 6 ist zusätzlich dargestellt, dass der Laserpfad 3 in Richtung der geometrischen Werkstück-Längsachse 5 verschoben wird. Hierbei handelt es sich um eine Parallelverschiebung des Laserpfads 3 in die durch einen Pfeil gekennzeichnete Richtung.

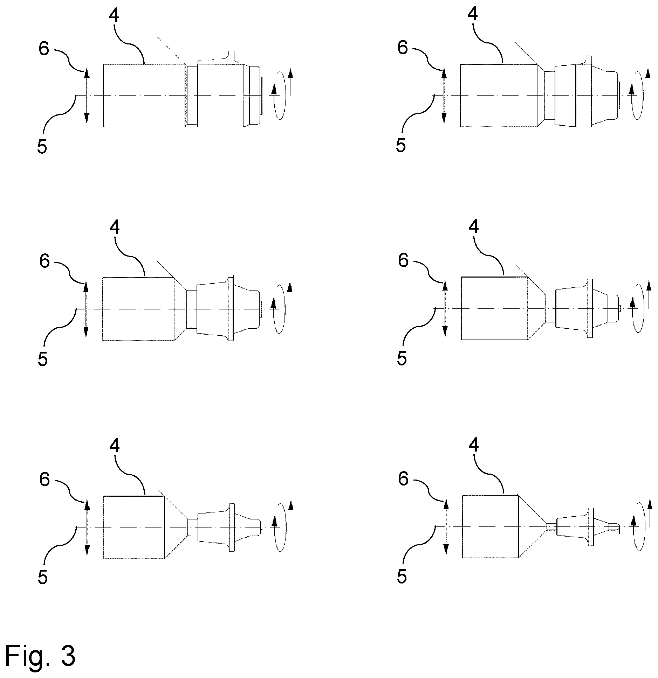

Die erste Bewegung, die zweite Bewegung und die dritte Bewegung werden zeitgleich ausgeführt. Sie sind einander überlagert. Dabei wird mit dem Laserstrahl 2 Material an der Oberfläche des Werkstücks 4 abgetragen, wobei Schritt für Schritt die vorgegebene Werkstück-Form des Werkstücks 4 erzeugt wird. Dies ist in Figur 3 dargestellt. Bei dem ersten Ausführungsbeispiel tritt der in den Figuren 1, 4, 5 und 6 dargestellte Laserstrahl 2 zuerst an dem in Figur 2 dargestellten Berührungspunkt 7 mit dem Werkstück 4 in Kontakt. Dieser Berührungspunkt 7 fällt mit dem ersten Punkt A des Laserpfads 3 zusammen.

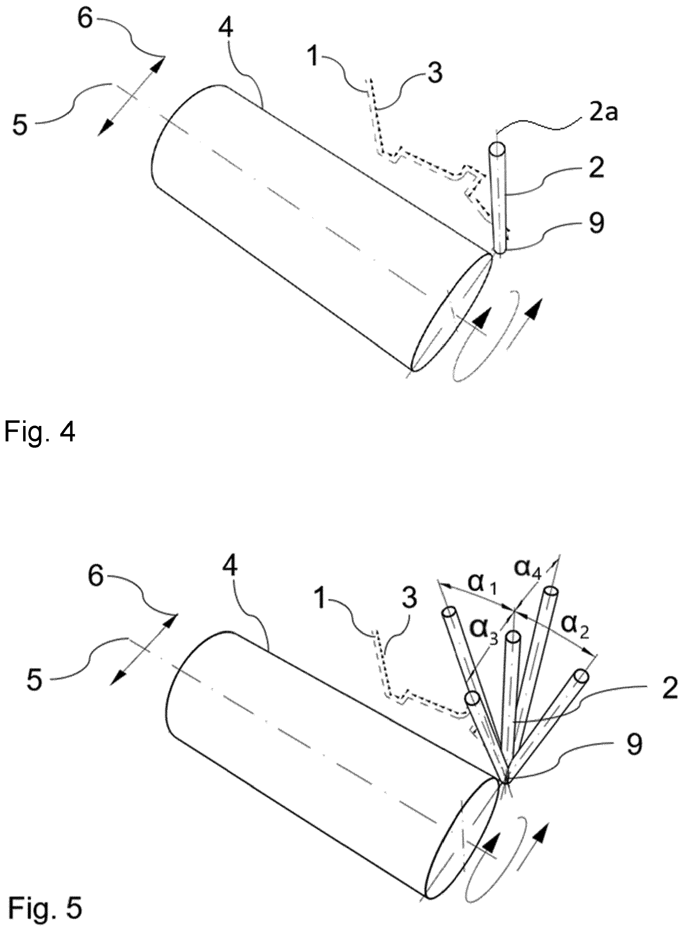

Der Laserstrahl 2 kann mit seiner Strahlachse 2a senkrecht zu einer Werkstück-Ebene 8 ausgerichtet sein. Die Werkstück-Ebene 8 ist eine geometrische Ebene, welche sich durch das Werkstück erstreckt. Die geometrische Werkstück-Längsachse 5 verläuft in der Werkstück-Ebene. Die Werkstück-Ebene 8 ist in den Figuren 9a, 9b, 10a und 10b dargestellt. Grundsätzlich gibt es beliebig viele Werkstück-Ebenen, die sich durch das Werkstück 4 erstrecken und in denen die Werkstück-Längsachse 5 verläuft. Alle Ebenen, die diese Bedingungen erfüllen, schneiden sich in der Werkstück-Längsachse 5. Die in den Figuren 9a, 9b, 10a und 10b dargestellte Werkstück-Ebene 8 weist die Besonderheit auf, dass der Laserstrahl 2 senkrecht zu dieser Werkstück-Ebene 8 ist. Die senkrechte Ausrichtung des Laserstrahls 2 ist in den Figuren 4, 6, 9a, 9b, 10a und 10b dargestellt. Wenn der Laserstrahl 2 senkrecht zu der Werkstück-Ebene 8 ausgerichtet ist, verläuft der Laserstrahl 2 beim Materialabtrag tangential zur Oberfläche des Werkstücks 4. Alternativ dazu kann der Laserstrahl 2 gegenüber einer dieser senkrechten Ausrichtung um einen Winkel α verkippt sein. Eine zu der Werkstück-Ebene 8 senkrechte Gerade wird auch als Normale bezeichnet. Die Strahlachse 2a des Laserstrahls 2 verläuft entweder senkrecht zu der Werkstück-Ebene 8 oder schließt mit einer Normalen zu der Werkstück-Ebene 8 einen Winkel von maximal 10° ein. Der Laserstrahl 2 und das Werkstück 4 werden derart miteinander in Kontakt gebracht, dass der Laserstrahl 2 tangential zu der Oberfläche des rotierenden Werkstücks ausgerichtet ist oder mit der Tangente an die Werkstückoberfläche einen Winkel von maximal 10° einschließt. Dies ist in Figur 5 dargestellt. Die Darstellung zeigt, dass die Strahlachse 2a des Laserstrahls 2 in verschiedene Richtungen gegenüber einer Tangente an die Werkstückoberfläche in dem zu bearbeitenden Punkt ausgerichtet sein kann. Der Laserfokus 9 befindet sich vorteilhafterweise an oder nahe der Oberfläche des Werkstücks 4. Figur 5 zeigt exemplarisch vier verschiedene Richtungen, in die der Laserstrahl 2 mit seiner Strahlachse geneigt sein kann. Bei den Winkeln α₁ und α₂ verlaufen die Strahlachse des Laserstrahls 2 und die Tangente an den zu bearbeitenden Punkt an der Oberfläche des Werkstücks 4 in einer Ebene, die parallel zur Werkstück-Längsachse 5 ist. Bei den Winkeln α₃ und α₄ verlaufen die Strahlachse des Laserstrahls 2 und die Tangente an den zu bearbeitenden Punkt an der Oberfläche des Werkstücks 4 in einer Ebene, die senkrecht zur Werkstück-Längsachse 5 ist. Die Neigung des Laserstrahls um einen Winkel α kann jedoch auch in jede beliebige andere Richtung erfolgen. Die Winkel α, α₁, α₂, α₃, α₄ zwischen der Strahlachse des Laserstrahls 2 und der Tangente an die zu erzeugende Werkstück-Form des Werkstücks betragen zwischen 1° und 10° ein.

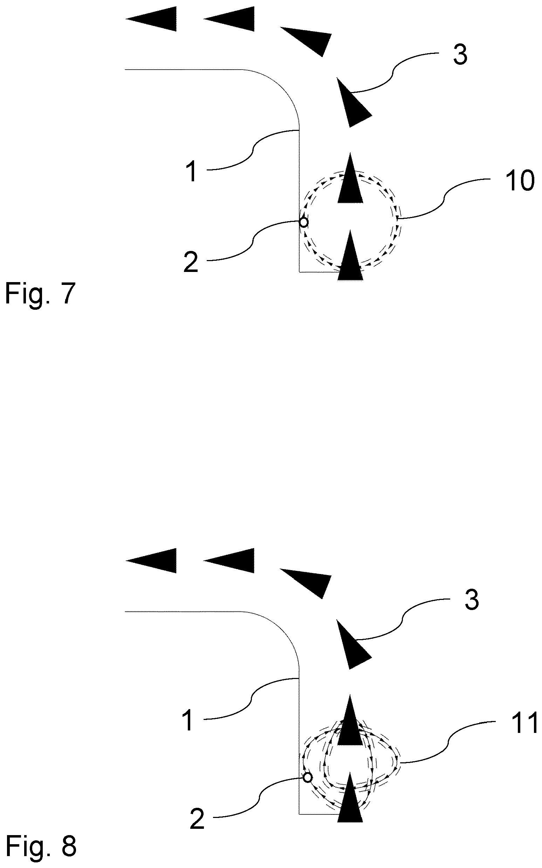

In den Figuren 7 und 8 ist eine zusätzliche Bewegung des Laserstrahls 2 dargestellt. Diese wird als vierte Bewegung bezeichnet. Der Laserstrahl 2 wird bei seiner Führung entlang des Laserpfads 3 zusätzlich entlang geschlossener kreisförmiger Kurven 10 oder unregelmäßig geformter Kurven 11 bewegt.

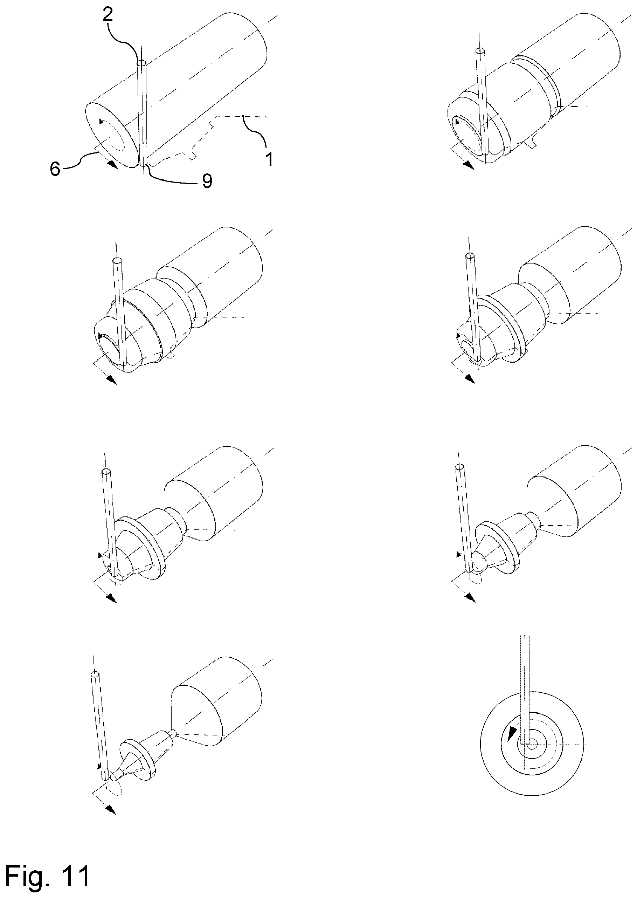

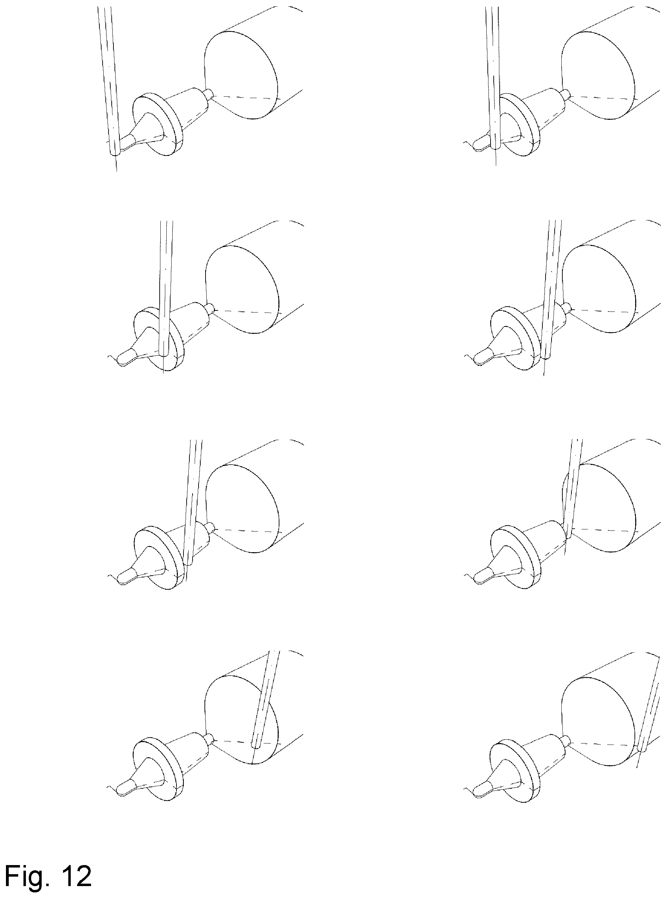

In den Figuren 9a, 9b, 10a, 10b, 11 und 12 sind das Werkstück 4 und der Laserstrahl 2 in verschiedenen Ansichten zu verschiedenen Zeitpunkten der Laserbearbeitung dargestellt. Die Darstellung zeigt, dass sich der Fokus 9 des Laserstrahls 2 unmittelbar an der Oberfläche des Werkstücks 4 befindet. Die Figur 11 zeigt darüber hinaus das Aussehen des Werkstücks 4 in verschiedenen Abschnitten der Laserbearbeitung. Figur 12 zeigt, wie der Laserstrahl 2 relativ zu dem Werkstück 4 während der zweiten Bewegung geführt wird und sich dabei entlang des vorgegebenen Laserpfads 3 bewegt. Die erste Darstellung in Figur 12 zeigt den Laserstrahl 2 im ersten Punkt A. Die letzte Darstellung in Figur 12 zeigt den Laserstrahl 2 im zweiten Punkt B. In dieser letzten Darstellung in Figur 12 ist die Laserbearbeitung abgeschlossen. Das Werkstück weist nun die zu erzeugende dreidimensionale äußere Werkstück-Form auf. Diese zu erzeugende äußere Werkstück-Form ist darüber hinaus auch in Figur 10a und in der vorletzten Darstellung der Figur 11 gezeigt. Die vorgegebene äußere Werkstück-Form weist in verschiedenen axialen Abschnitten unterschiedliche Querschnitte auf. Dabei ist die vorgegebene äußere Werkstück-Form insgesamt rotationssymmetrisch. Die übrigen Darstellungen in Figur 12 zeigen den Laserstrahl 2 an Positionen auf dem Laserpfad 3 zwischen den Punkten A und B.

**In** den Figuren 9a und 10a ist der Laserpfad 3 als Schnittmenge zwischen der geometrischen Werkstück-Ebene 8 und der zu erzeugenden äußeren Werkstück-Form dargestellt.

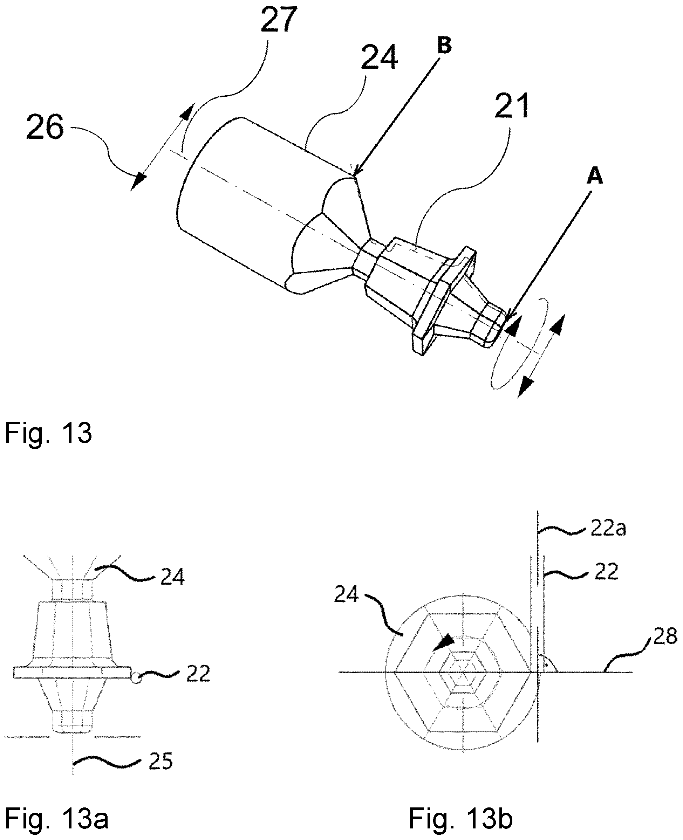

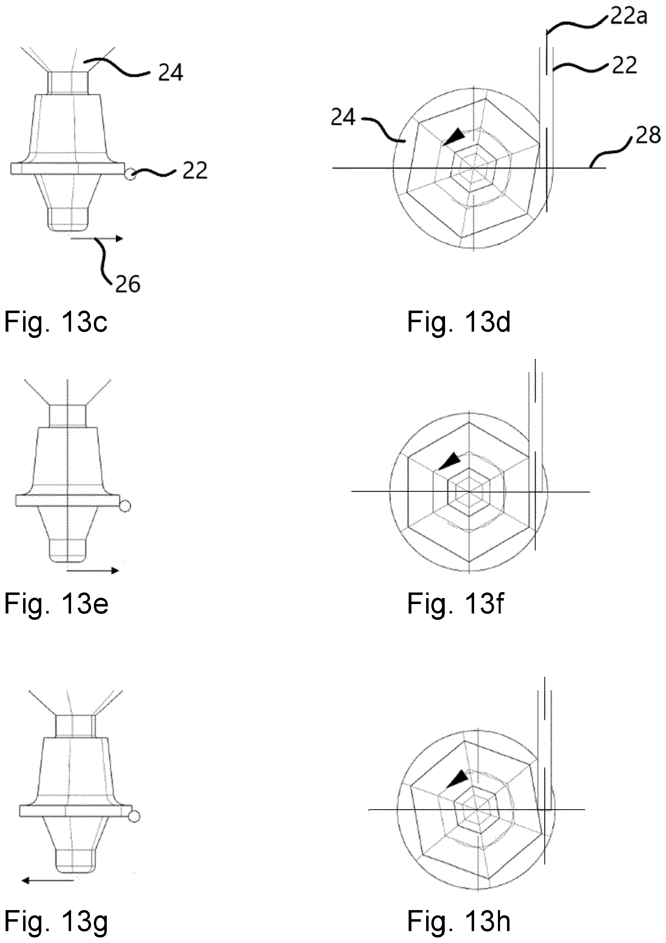

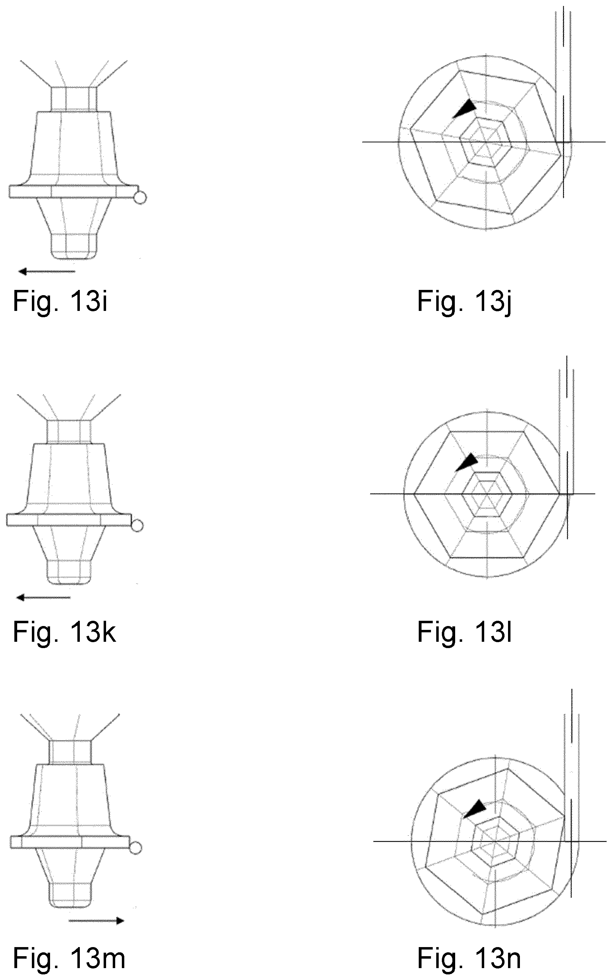

**In** den Figuren 13 und 13a bis 13n ist ein zweites Ausführungsbeispiel einer Laserbearbeitung dargestellt. Es unterscheidet sich von dem ersten Ausführungsbeispiel der Figuren 1 bis 12 dadurch, dass das Werkstück 24 eine zu erzeugende äußere Werkstück-Form 21 aufweist, die ebene Flächen umfasst. Das Werkstück 24 weist nach Abschluss der Laserbearbeitung in dem bearbeiteten Abschnitt sechseckige Querschnitte unterschiedlicher Größe auf. Die zu erzeugende Werkstück-Form ist daher nicht rotationssymmetrisch. Diese äußere Werkstück-Form wird durch eine Überlagerung der ersten Bewegung, nämlich eine Rotation des Werkstücks 24 um die geometrische Werkstück-Längsachse 25, der zweiten Bewegung, welche einer Führung des Laserstrahls entlang eines durch die zu erzeugende äußere Werkstück-Form 21 vorgegebenen Laserpfads zwischen den beiden Punkten A und B entspricht, und durch die dritte Bewegung in Form einer Vorschubbewegung in Richtung 26 erzeugt. Dabei ist der Laserstrahl 22 mit seiner Strahlachse 22a senkrecht zu der Werkstück-Ebene 28 ausgerichtet, in der die geometrische Werkstück-Längsachse 25 verläuft. Die Werkstück-Ebene ist in Figur 13b dargestellt. Die beiden Punkte A und B, welche in axialer Richtung die Grenzen der Werkstück-Kontur darstellen, sind in axialer Richtung bezogen auf die geometrische Werkstück-Längsachse 25 versetzt. Sie darüber hinaus in radialer Richtung versetzt.

Die Figuren 13a bis 13n zeigen in einem axialen Abschnitt des Werkstücks 24 gemäß Figur 13 die verschiedenen Stufen des Materialabtrags und die zugehörige Ausrichtung des Laserstrahls 22 relativ zu dem Werkstück 24. Die Pfeile 26 in den Figuren 13c, 13e, 13g, 13i, 13k und 13m zeigen dabei, wie die als dritte Bewegung bezeichnete Vorschubbewegung mit der als erste Bewegung bezeichnete Rotationsbewegung des Werkstücks 24 um seine geometrische Werkstück-Längsachse 25 und der Position des Laserstrahls 22 entlang des Laserpfads zwischen den Punkten A und B koordiniert ist, um den vorgegebenen eckigen Querschnitt zu erzeugen, der dem zugehörigen axialen Abschnitt zugeordnet ist. Die Werkstück-Form 21 kann dabei an einem kreiszylindrischen Werkstück erzeugt werden, wie dies in Figur 1 dargestellt ist. Die Figuren 13b, 13d, 13f, 13h, 13j, 13I und 13n zeigen, dass sich die Ausrichtung des Laserstrahls 22 relativ zu der Werkstück-Ebene 28 während der Laserbearbeitung nicht ändert.

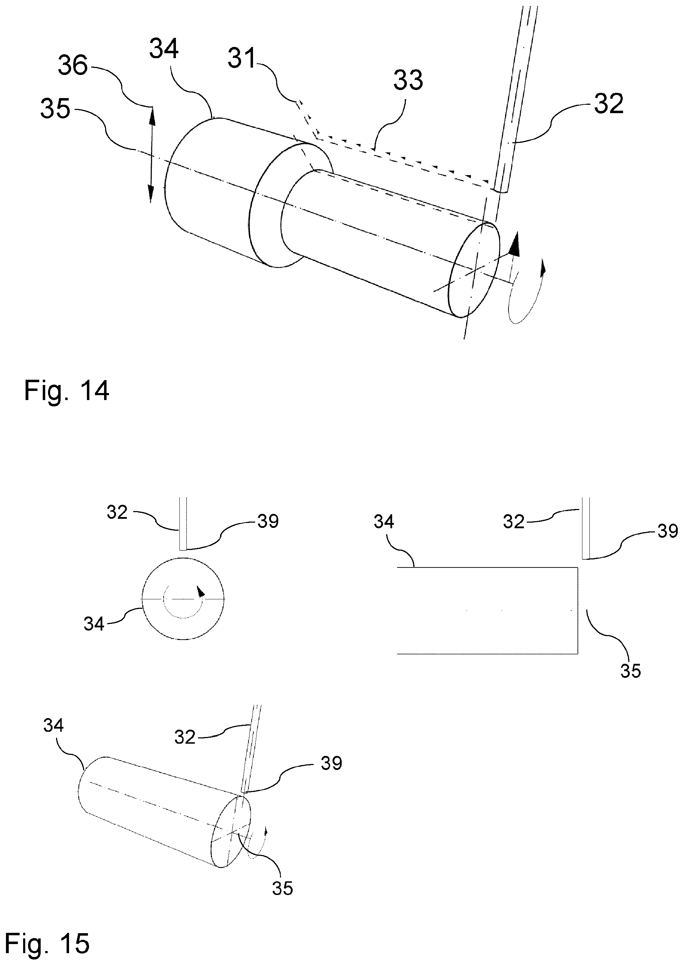

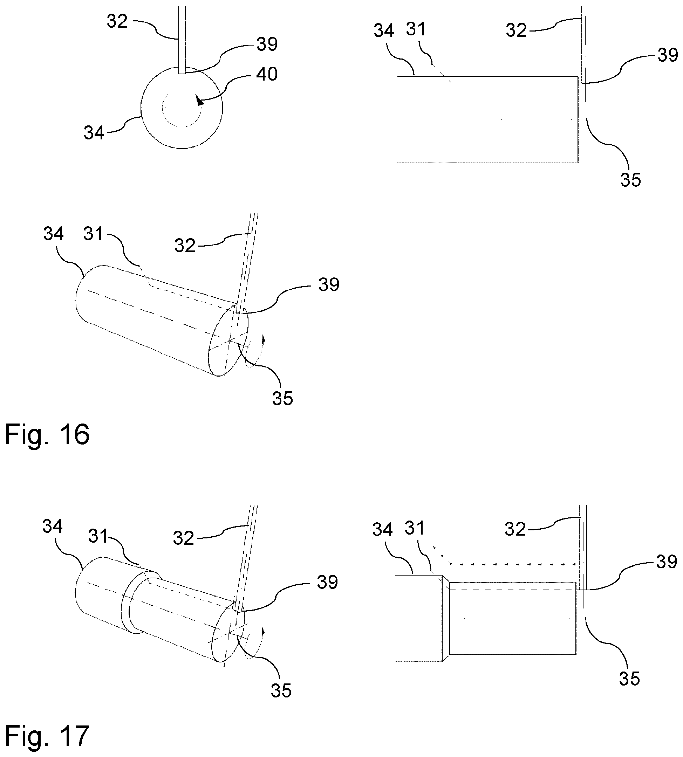

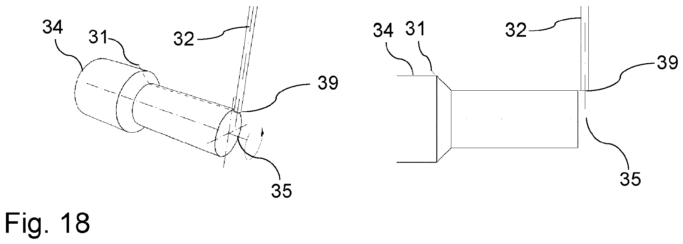

**In** den Figuren 14 bis 18 ist ein nicht erfindungsgemäßes Ausführungsbeispiel einer Laserbearbeitung dargestellt. Es unterscheidet sich von dem ersten Ausführungsbeispiel gemäß Figuren 1 bis 12 dadurch, dass das Laserstrahl 32 beim Materialabtrag mit seiner Strahlachse radial zu der geometrischen Werkstück-Längsachse 35 des Werkstücks 34 ausgerichtet ist. Der Laserstrahl 32 wird entlang des Laserpfads 33 geführt, der durch eine zu erzeugende Werkstück-Kontur 31 des Werkstücks 34 vorgegeben ist. Die Vorschubbewegung gemäß dritter Bewegung erfolgt in Richtung 36. Figur 15 zeigt das Werkstück 34 und den Laserstrahl 32 vor Beginn der Laserbearbeitung. Das Werkstück weist in diesem Stadium die Form eines Kreiszylinders auf. In Figur 16 startet die Laserbearbeitung. Durch die Vorschubbewegung der dritten Bewegung wird das Werkstück 34 derart auf den Laserstrahl 32 zubewegt, dass sich der Fokus 39 im Bereich der zu erzeugenden Werkstück-Kontur 31 befindet. Durch den Pfeil 40 ist die Rotation des Werkstücks 34 um die Werkstück-Längsachse 35 gemäß der ersten Bewegung dargestellt. Figur 17 zeigt das Werkstück 34, nachdem bereits ein Teil des Materials an der Außenseite abgetragen wurde. Figur 18 zeigt das fertige Werkstück am Ende der Laserbearbeitung.

In Figur 19 ist die Laserbearbeitungsvorrichtung 50 zur Durchführung des Verfahrens dargestellt. Die Laserbearbeitungsvorrichtung 50 umfasst eine Werkstück-Fixiereinrichtung 51, welche ein Werkstück 54 aufnimmt und fixiert, eine Bewegungseinrichtung 53, welche das in der Fixiereinrichtung angeordnete Werkstück 54 relativ zu einer Vorrichtungsbasis 55 bewegt, einen Laser 56, der einen Laserstrahl 52 erzeugt und eine Laserablenkeinrichtung 57, welche den Laserstrahl 52 führt. Die Bewegungseinrichtung 53 weist im vorliegenden Fall drei lineare Achsen X, Y, Z und zwei Rotationsachsen B und C auf. Die Rotationsachse C sorgt dabei für eine Rotation des in der Werkstück-Fixiereinrichtung 51 angeordneten Werkstücks 54 um eine geometrische Werkstück-Längsachse, welche sich durch das Werkstück hindurch erstreckt. Die Laserablenkeinrichtung 57 bewegt und führt den Laserstrahl 52 in drei verschiedene Richtungen im Raum. Dabei wird der Laserstrahl 52 entlang eines in Figur 19 nicht dargestellten Laserpfads relativ zum Werkstück 54 bewegt. Hierzu umfasst die Laserablenkeinrichtung 57 mehrere Spiegel, welche den Laserstrahl gezielt umlenken können. Darüber hinaus ist die Laserablenkeinrichtung mit mindestens einer Linse ausgestattet, welche den Laserstrahl auf die Oberfläche des Werkstücks 54 fokussiert. Die Spiegel und die Linse sind in der Zeichnung nicht dargestellt.

### Bezugszahlen

- 1: zu erzeugende Werkstück-Kontur
- 2: Laserstrahl
- 2a: Strahlachse
- 3: Laserpfad
- 4: Werkstück
- 5: Werkstück-Längsachse
- 6: Bewegungsrichtung des Werkstücks bei der der dritten Bewegung
- 7: Berührungspunkt von Laserstrahl und Werkstück zu Beginn der Laserbearbeitung
- 8: Werkstück-Ebene
- 9: Laserfokus
- 10: Geschlossene Kurve bei der Bewegung des Laserstrahls gemäß vierter Bewegung
- 11: Offene Kurve bei der Bewegung des Laserstrahls gemäß vierter Bewegung
- 21: zu erzeugende Werkstück-Form
- 22: Laserstrahl
- 22a: Strahlachse
- 24: Werkstück
- 25: Werkstück-Längsachse
- 26: Richtung der Vorschubbewegung
- 28: geometrische Werkstück-Ebene
- 31: zu erzeugende Werkstück-Kontur des Werkstücks
- 32: Laserstrahl
- 33: Laserpfad
- 34: Werkstück
- 35: Werkstück-Längsachse
- 36: Richtung der Vorschubbewegung
- 39: Fokus des Laserstrahls
- 40: Rotation gemäß der ersten Bewegung
- 50: Laserbearbeitungsvorrichtung
- 51: Werkstück-Fixiereinrichtung
- 52: Laserstrahl
- 53: Werkstück-Bewegungseinrichtung
- 54: Werkstück
- 55: Vorrichtungsbasis
- 56: Laser
- 57: Laserablenkeinrichtung

## Patentansprüche

1. Verfahren zur laserbasierten Bearbeitung eines länglichen Werkstücks (4, 24, 54), welches sich entlang einer geometrischen Werkstück-Längsachse (5, 25) erstreckt wobei an dem Werkstück (4, 24, 54) durch Materialabtrag mittels eines Laserstrahls (2, 52) eine vorgegebene dreidimensionale äußere Werkstück-Form (21) mit einer Werkstück-Kontur (1) erzeugt wird, wobei die Werkstück-Kontur (1) der Schnittmenge der zu erzeugenden dreidimensionalen äußeren Werkstück-Form (21) mit einer geometrischen Werkstück-Ebene (8, 28), in der die geometrische Werkstück-Längsachse (5, 25) verläuft, entspricht, wobei sich die Werkstück-Kontur (1) zwischen einem ersten Punkt A und einem zweiten Punkt B erstreckt und die Punkte A und B zumindest in axialer Richtung versetzt zueinander sind, unter Verwendung einer Laserbearbeitungsvorrichtung (50), welche eine das Werkstück (4, 24, 54) aufnehmende und fixierende Werkstück-Fixiereinrichtung (51),
eine Bewegungseinrichtung( 53), welche die Werkstück-Fixiereinrichtung relativ zu einer Vorrichtungsbasis (55) bewegt, und
einen Laser (56) umfasst, welcher einen entlang einer Strahlachse (2a, 22a) gerichteten Laserstrahl (2, 52) erzeugt und welcher eine den Laserstrahl (2, 52) gezielt ablenkende Laserablenkeinrichtung (57) aufweist,
wobei das Verfahren die folgenden Verfahrensschritte aufweist:
- Anordnen des Werkstücks (4, 24, 54) in der Werkstück-Fixiereinrichtung (51),
- Ausführen der folgenden drei Bewegungen:
eine erste Bewegung, welche eine Werkstück-Rotationsbewegung ist, bei der die Werkstück-Fixiereinrichtung (51) mit der Bewegungseinrichtung (53) zur Rotation angetrieben wird und dabei das in der Werkstück-Fixiereinrichtung (51) angeordnete Werkstück (4, 24, 54) um die geometrische Werkstück-Längsachse (5, 25) endlos gedreht wird und eine fortlaufende Abfolge vollständiger Umdrehungen vollführt,
eine zweite Bewegung, welche eine Führung des Laserstrahls (2, 52) ist, wobei der Laserstrahl (2, 52) mittels der Laserablenkeinrichtung (57) entlang eines vorgegebenen Laserpfads (3) bewegt wird, welcher der Werkstück-Kontur (1) zwischen dem Punkt A und dem Punkt B entspricht, wobei der Laserstrahl (2, 22) gegenüber der geometrischen Werkstück-Ebene (8, 28) senkrecht ausgerichtet ist oder mit einer Normalen zur Werkstück-Ebene (8, 28) einen Winkel von maximal 10° einschließt, wobei der Laserstrahl (2, 52) bei der zweiten Bewegung mehrfach an dem Laserpfad (3) zwischen A und B entlanggeführt wird.
eine dritte Bewegung, welche eine Vorschubbewegung ist, bei der die Werkstück-Fixiereinrichtung (51) und/ oder der Laserstrahl (2, 52) vorgeschoben werden, wobei die Oberfläche des in der Werkstück-Fixiereinrichtung (51) angeordneten Werkstücks (4, 24, 54) mit dem Laserstrahl (2, 52) derart in Kontakt tritt, dass der Laserstrahl tangential zu der Oberfläche des Werkstücks (4, 24, 54) ausgerichtet ist oder mit der Tangente an die Oberfläche des Werkstücks (4, 24, 54) einen Winkel von maximal 10° einschließt, wobei mit dem Laserstrahl (2, 52) Material an der Oberfläche des Werkstücks (4, 24, 54) abgetragen und die vorgegebene dreidimensionale äußere Werkstück-Form (21) mit der Werkstück-Kontur (1, 21) erzeugt wird,
wobei die erste Bewegung, die zweite Bewegung und die dritte Bewegung gleichzeitig und parallel zueinander ausgeführt werden, bis die vorgegebene Werkstück-Form (21) mit der Werkstück-Kontur (1) an dem Werkstück (4, 24, 54) erzeugt ist.

2. Verfahren nach Anspruch 1, **dadurch gekennzeichnet, dass** der Laserstrahl (2, 52) entlang des Laserpfads (3) von A nach B und anschließend von B nach A geführt wird.

3. Verfahren nach einem der vorhergehenden Ansprüche, **dadurch gekennzeichnet, dass** der Laserstrahl (2, 52) bei der zweiten Bewegung entlang des Laserpfads (3) von A nach B senkrecht zur Strahlachse bewegt wird.

4. Verfahren nach einem der vorhergehenden Ansprüche, **dadurch gekennzeichnet, dass** der erste Punkt A und der zweite Punkt B in axialer Richtung bezogen auf die geometrische Werkstück-Längsachse (5, 25) die Grenzen der mit dem Verfahren zu erzeugenden äußeren Werkstück-Form (4, 24, 54) darstellen.

5. Verfahren nach einem der vorhergehenden Ansprüche, **dadurch gekennzeichnet, dass** der Laserstrahl (2, 52) eine zusätzliche vierte Bewegung ausführt, bei der der Laserstrahl (2, 52) in offenen oder geschlossenen Kurven um ein Zentrum bewegt wird, und dass die vierte Bewegung der zweiten Bewegung überlagert ist.

6. Verfahren nach Anspruch 5, **dadurch gekennzeichnet, dass** das Verhältnis zwischen dem Durchmesser der offenen oder geschlossenen Kurve und dem Durchmesser des Laserstrahls (2, 52) beim Auftreffen auf das Werkstück (4, 24, 54) zwischen 1,2 und 150 beträgt.

7. Verfahren nach einem der vorhergehenden Ansprüche, **dadurch gekennzeichnet, dass** bei der dritten Bewegung die Werkstück-Fixiereinrichtung (51) in einer Richtung senkrecht zur Strahlachse des Laserstrahls (2, 52) bewegt wird.

8. Verfahren nach einem der vorhergehenden Ansprüche, **dadurch gekennzeichnet, dass** bei der dritten Bewegung der Laserstrahl (2, 52) in Richtung des Werkstücks (4, 24, 54) bewegt wird.

9. Verfahren nach einem der vorhergehenden Ansprüche, **dadurch gekennzeichnet, dass** die dritte Bewegung eine lineare Bewegung in radialer Richtung bezogen auf die geometrische Werkstück-Längsachse (5, 25) umfasst.

10. Verfahren nach einem der vorhergehenden Ansprüche, **dadurch gekennzeichnet, dass** die dritte Bewegung eine lineare Bewegung in axialer Richtung oder parallel zur axialen Richtung bezogen auf die geometrische Werkstück-Längsachse (5, 25) umfasst.

11. Verfahren nach einem der vorhergehenden Ansprüche, **dadurch gekennzeichnet, dass** der Laserstrahl (2, 22) mit seiner Strahlachse beim Abtragen von Material an der Oberfläche des Werkstücks (4, 24) parallel zu einer radialen Richtung bezogen auf die geometrische Werkstück-Längsachse (5, 25) ausgerichtet ist.

12. Verfahren nach einem der vorhergehenden Ansprüche, **dadurch gekennzeichnet, dass** der Laserstrahl (2, 52) mit seiner Strahlachse gegenüber einer Tangente an die Oberfläche des Werkstücks (4, 24, 54) um einen Winkel α in axialer Richtung geneigt ist, wobei der Winkel α zwischen 1° und 10° beträgt.

13. Verfahren nach einem der vorhergehenden Ansprüche, **dadurch gekennzeichnet, dass** die dritte Bewegung in Abhängigkeit von der zweiten Bewegung gesteuert ist.

14. Verfahren nach einem der vorhergehenden Ansprüche, **dadurch gekennzeichnet, dass** die dritte Bewegung in Abhängigkeit von der ersten Bewegung gesteuert ist.

15. Verfahren nach einem der vorhergehenden Abschnitte, dass in einem Axialabschnitt zwischen den Punkten A und B entlang des gesamten Umfangs des Werkstücks (4, 24, 54) ein Materialabtrag erfolgt.

16. Verfahren nach einem der vorhergehenden Ansprüche, **dadurch gekennzeichnet, dass** während des gesamten Materialabtrags die Werkstück-Rotationsbewegung mit konstanter Geschwindigkeit erfolgt.

17. Laserbearbeitungsvorrichtung zur Durchführung des Verfahrens nach einem der vorhergehenden Ansprüche, **dadurch gekennzeichnet, dass** sie eine das Werkstück (4, 24, 54) aufnehmende und fixierende Werkstück-Fixiereinrichtung (51), eine Bewegungseinrichtung (53), welche die Werkstück-Fixiereinrichtung (51) relativ zu einer Vorrichtungsbasis (55) bewegt, und einen Laser (56) umfasst, welcher einen entlang einer Strahlachse (2a, 22a) gerichteten Laserstrahl (2, 22, 52) erzeugt und welcher eine den Laserstrahl (2, 22, 52) gezielt ablenkende Laserablenkeinrichtung (57) aufweist,
wobei die Bewegungseinrichtung (53) ausgebildet ist, eine erste Bewegung, welche eine Werkstück-Rotationsbewegung ist, auszuführen, bei der die Werkstück-Fixiereinrichtung (51) rotiert und dabei das in der Werkstück-Fixiereinrichtung (51) angeordnete längliche Werkstück (4, 24, 54) um seine geometrische Werkstück-Längsachse (5, 25) endlos gedreht wird und eine fortlaufende Abfolge vollständiger Umdrehungen vollführt, wobei die Laserablenkeinrichtung (57) ausgebildet ist, in einer zweiten Bewegung den Laserstrahl (2, 52) zu führen und dabei den Laserstrahl (2, 22, 52) entlang eines vorgegebenen Laserpfads (3) zu bewegen, wobei sich der Laserpfad (3) von einem ersten Punkt A bis zum einem zweiten Punkt B erstreckt und der Laserpfad (3) durch den Verlauf der Werkstück-Kontur (1) der zu erzeugenden dreidimensionalen äußere Werkstück-Form (21) vorgegeben ist,
wobei die Bewegungseinrichtung (53) und/ oder der Laser (56) ausgebildet sind, eine Vorschubbewegung als dritte Bewegung auszuführen, derart, dass die Oberfläche des in der Werkstück-Fixiereinrichtung (51) angeordneten Werkstücks (4, 24, 54) mit dem Laserstrahl (2, 22, 52) in Kontakt tritt, wobei mit dem Laserstrahl (2, 22, 52) Material an der Oberfläche des Werkstücks (4, 24, 54) abgetragen und die vorgegebene äußere Werkstück-Form (21) mit der Werkstück-Kontur (1) erzeugt wird,
wobei die Laserbearbeitungsvorrichtung (50) mit einer Steuerungseinrichtung ausgestattet ist, welche die erste Bewegung, die zweite Bewegung und die dritte Bewegung steuert, wobei die erste Bewegung, die zweite Bewegung und die dritte Bewegung zeitgleich erfolgen.

## Claims

1. Method for laser machining an elongated workpiece (4, 24, 54) that extends along a geometric workpiece longitudinal axis (5, 25),
wherein a predetermined three-dimensional outer workpiece shape (21) with a workpiece contour (1) is produced at the elongated workpiece (4, 24, 54) by removing material through a laser beam (2, 52),
wherein the workpiece contour (1) corresponds to an intersection of the three-dimensional outer workpiece shape (21) to be produced with a geometric workpiece plane (8, 28) in which the geometric workpiece longitudinal axis (5, 25) extends,
wherein the workpiece contour (1) extends between a first point A and a second point **B,** and the points A and B are offset from one another at least in an axial direction,
using a laser machining device (50) including a workpiece fixing device (51) for receiving and fixing the workpiece (4, 24, 54),
a movement device (53) moving the workpiece fixing device (51) relative to a device base (55),
a laser (56) generating a laser beam (2, 52) oriented along a beam axis (2a, 22a) and including a laser deflection device (57) deflecting the laser beam (2, 52) in a controlled manner, the method comprising the following steps
- arranging the workpiece (4, 24, 54) in the workpiece fixing device (51)
- performing the following three movements:
a first movement that is a workpiece rotation movement where the workpiece fixing device (51) is driven by the workpiece movement device (53) to rotate the workpiece (4, 24, 54) arranged in the workpiece fixing device (51) about the geometric workpiece longitudinal axis (5, 25) in a continuous sequence of complete rotations,
a second movement guiding the laser beam (2, 52), so that the laser beam (2, 52) is moved along a predetermined laser path (3) by the laser deflection device (57), wherein the predetermined laser path (3) corresponds to the workpiece contour (1) between the first point (A) and the second point (B)
wherein the laser beam (2, 22) is oriented perpendicular relative to the geometric workpiece plane (8, 28) and encloses on angle of 10 degrees at the most with an orthogonal of the geometric workpiece plane (8, 28),
wherein the laser beam (2, 52) is guided along the laser path between A and B multiple times during the second movement,
a third movement that is a feed movement where the workpiece fixing device (51) and/or the laser beam (2, 52) are advanced so that the surface of the workpiece (4, 24, 54) arranged in the workpiece fixing device (51) contacts the laser beam (2, 52) so that the laser beam is oriented tangential to the surface of the workpiece (4, 24, 54) or encloses an angle of 10 degrees at the most with a tangent to the surface of the workpiece (4, 24, 54), wherein the laser beam (2, 52) removes material from the surface of the workpiece (4, 24, 54) and generates the predetermined three-dimensional outer workpiece shape (21) with the workpiece contour (1, 21),
wherein the first movement, the second movement, and the third movement are performed simultaneously and parallel with one another until the predetermined workpiece shape with the workpiece contour (1) is generated at the workpiece (4, 24, 54).

2. Method according to claim 1, **characterized in that** the laser beam (2, 52) is guided along the laser path (3) from A to B and subsequently from B to A.

3. Method according to one of the preceding claims , **characterized in that** the laser beam (2, 52) is moved along the laser path (3) from A to B perpendicular to the beam axis in the second movement.

4. Method according to one of the preceding claims, **characterized in that** the first point A and the second point B form boundaries of the outer work piece shape (4, 24, 54) in the axial direction relative to the geometric work piece longitudinal axis (5, 25).

5. Method according to one of the preceding claims, **characterized in that** the laser beam (2, 52) performs an additional fourth movement, where the laser beam (2, 52) is moved about a center in open or closed curves and the fourth movement is superimposed to the second movement.

6. Method according to claim 5, **characterized in that** a ratio between a diameter of the open or closed curve and a diameter of the laser beam (2, 52) is between 1.2 and 150 at an impact point of the laser beam at the work piece (4, 24, 54).

7. Method according to one of the preceding claims, **characterized in that** the work piece fixing device (51) is moved in a direction perpendicular to the beam axis of the laser beam (2, 52) in the third movement.

8. Method according to one of the preceding claims, **characterized in that** the laser beam (2, 52) is moved towards the work piece (4, 24,54) in the third movement.

9. Method according to one of the preceding claims, **characterized in that** the third movement is a linear movement in the radial direction with reference to the geometric work piece longitudinal axis (5, 25).

10. Method according to one of the preceding claims, **characterized in that** the third movement includes a linear movement in the axial direction or parallel to the axial direction with reference to the geometric work piece longitudinal axis (5, 25).

11. Method according to one of the preceding claims, **characterized in that** a beam axis of the laser beam (2, 52) is oriented parallel to radial direction of the geometric work piece longitudinal axis (5, 25) when removing material from the surface of the work piece (4, 24).

12. Method according to one of the preceding claims, **characterized in that** a beam axis of the laser beam (2, 52) is inclined relative to a tangent at the surface of the work piece (4, 24, 54) by an angle α in the axial direction, wherein the angle α is between 1 degree and 10 degrees.

13. Method according to one of the preceding claims, **characterized in that** the third movement is controlled as a function of the second movement.

14. Method according to one of the preceding claims, **characterized in that** the third movement is controlled as a function of the first movement.

15. Method according to one of the preceding claims, **characterized in that** material is removed within an axial section between the points A and B along an entire circumference of the work piece (4, 24, 54).

16. Method according to one of the preceding claims, **characterized in that** a work piece rotation movement is performed with constant speed during an entire material removal.

17. A laser machining device configured to perform the method according to one of the preceding claims,
**characterized in that** it includes a workpiece fixing device (51) for receiving and fixing the workpiece (4, 24, 54), a movement device (53) that moves the workpiece fixing device (51) relative to a device base (55) and a laser (56) which generates a laser beam (2, 22, 52) oriented along a laser beam axis (2a, 22a), and which includes a laser deflection device (57) that deflects the laser beam (2, 22, 52) in a controlled manner,
wherein the movement device (53) is configured to perform a first movement that is a workpiece rotation movement where the workpiece fixing device (51) rotates endlessly the elongated workpiece (4, 24, 54) arranged in the workpiece fixing device (51) about the geometric workpiece longitudinal axis (5, 25) in a continuous sequence of complete rotations,
wherein the laser deflection device (57) is configured to guide the laser beam (2, 52) in a second movement , so that the laser beam (2, 52) is moved along a predetermined laser path (3), wherein the predetermined laser path (3) extends from the first point A to the second point B and wherein the laser path (3) is defined by the workpiece contour (1) of the three dimensional outer workpiece shape (21) to be generated,
wherein the workpiece movement device (53) and/or the laser (56) are configured to perform a feed movement as a third movement, so that the surface of the workpiece (4, 24, 54) arranged in the workpiece fixing device (51) contacts the laser beam (2, 52), wherein the laser beam (2, 22, 52) removes material from the surface of the workpiece (4, 24, 54) and generates the predetermined three-dimensional outer workpiece shape (21) with the workpiece contour (1), and
wherein laser machining device (50) is provided with a control device which controls the first movement, the second movement and the third movement, wherein the first movement, the second movement and the third movement are performed simultaneously.

## Revendications

1. Procédé
pour l'usinage au laser d'une pièce (4, 24, 54) allongée qui s'étend le long d'un axe longitudinal géométrique de pièce (5, 25), dans lequel est produite sur la pièce (4, 24, 54), par enlèvement de matière au moyen d'un faisceau laser (2, 52), une forme de pièce (21) extérieure tridimensionnelle prédéfinie comportant un contour de pièce (1), dans lequel le contour de pièce (1) correspond à l'intersection de la forme de pièce (21) extérieure tridimensionnelle à produire avec un plan géométrique de pièce (8, 28) dans lequel s'étend l'axe longitudinal géométrique de pièce (5, 25), dans lequel le contour de pièce (1) s'étend entre un premier point A et un second point B et les points A et B sont décalés l'un par rapport à l'autre au moins dans la direction axiale,
en utilisant un dispositif d'usinage au laser (50) qui comprend un appareil de fixation de pièce (51) recevant et fixant la pièce (4, 24, 54),
un appareil de déplacement (53) qui déplace l'appareil de fixation de pièce par rapport à une base de dispositif (55), et
un laser (56) qui produit un faisceau laser (2, 52) dirigé le long d'un axe de faisceau (2a, 22a) et qui présente un appareil de déviation de laser (57) déviant le faisceau laser (2, 52) de manière ciblée, dans lequel le procédé présente les étapes de procédé suivantes:
- disposition de la pièce (4, 24, 54) dans l'appareil de fixation de pièce (51),
- réalisation des trois mouvements suivants:
un premier mouvement qui est un mouvement de rotation de pièce lors duquel l'appareil de fixation de pièce (51) est entraîné en rotation par l'appareil de déplacement (53) et la pièce (4, 24, 54) disposée dans l'appareil de fixation de pièce (51) tourne ainsi sans fin autour de l'axe longitudinal géométrique de pièce (5, 25) et réalise une succession continue de rotations complètes,
un deuxième mouvement qui est un guidage du faisceau laser (2, 52), dans lequel le faisceau laser (2, 52) est déplacé au moyen de l'appareil de déviation de laser (57) le long d'un trajet de laser (3) prédéfini qui correspond au contour de pièce (1) entre le point A et le point **B,** dans lequel le faisceau laser (2, 22) est orienté perpendiculairement par rapport au plan géométrique de pièce (8, 28) ou forme un angle de 10° maximum avec une normale au plan de pièce (8, 28), dans lequel le faisceau laser (2, 52) est guidé plusieurs fois le long du trajet de laser (3) entre A et B lors du deuxième mouvement,
un troisième mouvement qui est un mouvement d'avance lors duquel l'appareil de fixation de pièce (51) et/ou le faisceau laser (2, 52) sont avancés, dans lequel la surface de la pièce (4, 24, 54) disposée dans l'appareil de fixation de pièce (51) entre en contact avec le faisceau laser (2, 52) de telle sorte que le faisceau laser est disposé de manière tangentielle par rapport à la surface de la pièce (4, 24, 54) ou forme un angle de 10° maximum avec la tangente à la surface de la pièce (4, 24, 54), dans lequel le faisceau laser (2, 52) enlève du matériau à la surface de la pièce (4, 24, 54) et produit la forme de pièce (21) extérieure tridimensionnelle prédéfinie comportant le contour de pièce (1, 21),
dans lequel le premier mouvement, le deuxième mouvement et le troisième mouvement sont exécutés simultanément et parallèlement les uns aux autres jusqu'à ce que la forme de pièce (21) prédéfinie soit produite avec le contour de pièce (1) sur la pièce (4, 24, 54).

2. Procédé selon la revendication 1, **caractérisé en ce que** le faisceau laser (2, 52) est guidé le long du trajet de laser (3) de A vers **B,** puis de B vers A.

3. Procédé selon l'une des revendications précédentes,
**caractérisé en ce que** le faisceau laser (2, 52) est déplacé de A vers B perpendiculairement à l'axe de faisceau lors du deuxième mouvement le long du trajet de laser (3).

4. Procédé selon l'une des revendications précédentes,
**caractérisé en ce que** le premier point A et le deuxième point B représentent, dans la direction axiale par rapport à l'axe longitudinal géométrique de pièce (5, 25), les limites de la forme de pièce (4, 24, 54) extérieure à produire par le procédé.

5. Procédé selon l'une des revendications précédentes,
**caractérisé en ce que** le faisceau laser (2, 52) exécute un quatrième mouvement supplémentaire lors duquel le faisceau laser (2, 52) est déplacé en courbes ouvertes ou fermées autour d'un centre, et **en ce que** le quatrième mouvement est superposé au deuxième mouvement.

6. Procédé selon la revendication 5, **caractérisé en ce que** le rapport entre le diamètre de la courbe ouverte ou fermée et le diamètre du faisceau laser (2, 52) lors de l'impact sur la pièce (4, 24, 54) est compris entre 1,2 et 150.

7. Procédé selon l'une des revendications précédentes,
**caractérisé en ce que**, lors du troisième mouvement, l'appareil de fixation de pièce (51) est déplacé dans une direction perpendiculaire à l'axe de faisceau du faisceau laser (2, 52).

8. Procédé selon l'une des revendications précédentes,
**caractérisé en ce que**, lors du troisième mouvement, le faisceau laser (2, 52) est déplacé en direction de la pièce (4, 24, 54).

9. Procédé selon l'une des revendications précédentes,
**caractérisé en ce que** le troisième mouvement comprend un mouvement linéaire dans la direction radiale par rapport à l'axe longitudinal géométrique de pièce (5, 25).

10. Procédé selon l'une des revendications précédentes,
**caractérisé en ce que** le troisième mouvement comprend un mouvement linéaire dans la direction axiale ou parallèle à la direction axiale par rapport à l'axe longitudinal géométrique de pièce (5, 25).

11. Procédé selon l'une des revendications précédentes,
**caractérisé en ce que** le faisceau laser (2, 22) est orienté avec son axe de faisceau parallèlement à une direction radiale par rapport à l'axe longitudinal géométrique de pièce (5, 25) lors de l'enlèvement de matière à la surface de la pièce (4, 24).

12. Procédé selon l'une des revendications précédentes,
**caractérisé en ce que** le faisceau laser (2, 52) est incliné avec son axe de faisceau par rapport à une tangente à la surface de la pièce (4, 24, 54) d'un angle α dans la direction axiale, dans lequel l'angle α est compris entre 1° et 10°.

13. Procédé selon l'une des revendications précédentes,
**caractérisé en ce que** le troisième mouvement est commandé en fonction du deuxième mouvement.

14. Procédé selon l'une des revendications précédentes,
**caractérisé en ce que** le troisième mouvement est commandé en fonction du premier mouvement.

15. Procédé selon l'un des paragraphes précédents, qu'un enlèvement de matière est effectué dans une section axiale entre les points A et B le long de toute la périphérie de la pièce (4, 24, 54).

16. Procédé selon l'une des revendications précédentes,
**caractérisé en ce que**, pendant toute la durée de l'enlèvement de matière, le mouvement de rotation de la pièce est effectué à vitesse constante.

17. Dispositif d'usinage au laser pour la mise en œuvre du procédé selon l'une des revendications précédentes, **caractérisé en ce qu'**il comprend un appareil de fixation de pièce (51) recevant et fixant la pièce (4, 24, 54), un appareil de déplacement (53) qui déplace l'appareil de fixation de pièce (51) par rapport à une base de dispositif (55), et un laser (56) qui génère un faisceau laser (2, 22, 52) dirigé le long d'un axe de faisceau (2a, 22a) et qui présente un appareil de déviation de laser (57) qui dévie le faisceau laser (2, 22, 52) de manière ciblée,
dans lequel l'appareil de déplacement (53) est conçu pour exécuter un premier mouvement qui est un mouvement de rotation de la pièce lors duquel l'appareil de fixation de pièce (51) tourne et la pièce (4, 24, 54) allongée disposée dans l'appareil de fixation de pièce (51) tourne ainsi sans fin autour de son axe longitudinal géométrique de pièce (5, 25) et réalise une succession continue de rotations complètes, dans lequel l'appareil de déviation de laser (57) est conçu pour guider le faisceau laser (2, 52) dans un deuxième mouvement et pour déplacer ainsi le faisceau laser (2, 22, 52) le long d'un trajet de laser (3) prédéfini, dans lequel le trajet de laser (3) s'étend d'un premier point A à un deuxième point B et le trajet de laser (3) est prédéfini par le tracé du contour de pièce (1) de la forme de pièce (21) extérieure tridimensionnelle à produire, dans lequel l'appareil de déplacement (53) et/ou le laser (56) sont conçus pour exécuter un mouvement d'avance en tant que troisième mouvement de telle sorte que la surface de la pièce (4, 24, 54) disposée dans l'appareil de fixation de pièce (51) entre en contact avec le faisceau laser (2, 22, 52), dans lequel le faisceau laser (2, 22, 52) enlève du matériau à la surface de la pièce (4, 24, 54) et produit la forme de pièce (21) extérieure prédéfinie comportant le contour de pièce (1),
dans lequel le dispositif d'usinage au laser (50) est équipé d'un appareil de commande qui commande le premier mouvement, le deuxième mouvement et le troisième mouvement, dans lequel le premier mouvement, le deuxième mouvement et le troisième mouvement sont effectués simultanément.
